# EUROPÄISCHE PATENTSCHRIFT

(11) **EP 2 956 762 B1**
(45) Veröffentlichungstag und Bekanntmachung des Hinweises auf die Patenterteilung: **31.01.2018**
(21) Anmeldenummer: 14704170.1
(22) Anmeldetag: 13.02.2014
(51) Int. Cl.: G01N 23/223, G21K 1/06

(54) **VORRICHTUNG ZUR RÄUMLICHEN AUSRICHTUNG EINER RÖNTGENOPTIK UND APPARATUR MIT EINER SOLCHEN**
DEVICE FOR SPATIALLY ORIENTING AN X-RAY OPTICAL UNIT AND APPARATUS HAVING SUCH A DEVICE
DISPOSITIF D'ALIGNEMENT DANS L'ESPACE D'UNE OPTIQUE À RAYONS X ET APPAREILLAGE LE COMPRENANT

(30) Priorität: 15.02.2013 DE 102013202487
(43) Veröffentlichungstag der Anmeldung: 23.12.2015
(73) Patentinhaber: Bruker Nano GmbH, 12489 Berlin (DE)
(72) Erfinder: BAUMANN, Thomas, 49159 Münster (DE); WALDSCHLÄGER, Ulrich, 12685 Berlin (DE)
(74) Vertreter: Gulde & Partner
(86) Internationale Anmeldenummer: PCT/EP2014/052852
(87) Internationale Veröffentlichungsnummer: WO 2014/125043

(56) Entgegenhaltungen:
- EP-A1- 1 758 132
- DE-A1-102006 011 944
- XU S ET AL: "Alignment protocol for effective use of hard x-ray quad collimator for micro-crystallography", OPTOMECHANICS 2011: INNOVATIONS AND SOLUTIONS, SPIE, 1000 20TH ST. BELLINGHAM WA 98225-6705 USA, Bd. 8125, Nr. 1, 8. September 2011 (2011-09-08), Seiten 1-8, XP060010139, DOI: 10.1117/12.894262 [gefunden am 1901-01-01]
- SHOVKUN, V. Y. ET AL: "STEND-70: multifunction arrangement for the x-ray capillary products testing", SPIE, PO BOX 10 BELLINGHAM WA 98227-0010 USA, Bd. 5943, 59430N, 6. Dezember 2006 (2006-12-06), Seiten 1-8, XP040215209, DOI: 10.1117/12.637928

## Beschreibung

Die Erfindung betrifft eine Vorrichtung zur räumlichen Ausrichtung einer Röntgenoptik mit einem optischen Eingangspunkt und einem optischen Ausgangspunkt. Zudem betrifft die Erfindung eine Apparatur, welche die erfindungsgemäße Vorrichtung und die Röntgenoptik umfasst.

Röntgenoptiken werden gemäß dem Stand der Technik innerhalb einer Messapparatur auf einen Brennfleck einer Röntgenröhre justiert und in einer gewünschten Richtung ausgerichtet. Ein Beispiel für eine Röntgenoptik ist eine Polykapillar-Röntgenlinse. Polykapillar-Röntgenlinsen weisen einen Eingangsfokus und einen Ausgangsfokus auf. Der Eingangsfokus wird im Rahmen einer Grundjustage der Messapparatur mit einem Brennfleck einer Röntgenröhre in Deckung gebracht. Der Brennfleck entsteht durch einen Beschuss einer Anode mit einem Elektrodenstrahl, wobei Röntgenstrahlung entsteht.

Dadurch, dass der Eingangsfokus mit dem Brennfleck in Deckung gebracht wird, kann ein möglichst großer Anteil der emittierten Röntgenstrahlung zur Untersuchung einer Probe genutzt werden. Die Untersuchung einer Probe erfolgt, indem der Ausgangsfokus auf der Oberfläche der Probe positioniert wird.

EP 1 758 132 A1 offenbart eine Vorrichtung zur räumlichen Ausrichtung einer Röntgenlinse. Die Vorrichtung umfasst zwei translatorische Versteller und zwei Goniometer-Versteller, welche hintereinander angeordnet sind. Die translatorischen Versteller sind jeweils als Doppel-Schwalbenschwanzführung ausgeführt. Jeder der Goniometer-Versteller weist eine gebogene Schwalbenschwanzführung auf, wobei die Kombination der zwei Goniometer-Versteller ein Theta-Phi-Goniometer ausbildet.

DE 10 2006 011 944 A1 offenbart eine Einstellvorrichtung für die optische Achse einer Röntgenstrahlenlinse. Die Vorrichtung umfasst eine austrittsseitige Einstellvorrichtung zum Einstellen eines austrittsseitigen Brennpunkts der Röntgenstrahlenlinse, die auf einen Röntgenstrahlendetektor scharfeingestellt werden soll und eine eintrittsseitige Einstellvorrichtung zum Einstellen eines eintrittsseitigen Brennpunkts der Röntgenstrahlenlinse, die auf einen Analysenpunkt einer Probe scharfeingestellt werden soll. Die austrittsseitige Einstellvorrichtung umfasst eine Einrichtung, die in der Lage ist, die Röntgenstrahlenlinse parallel zu zwei zur optischen Achse der Röntgenstrahlenlinse senkrechten Richtungen zu verschieben. Darüber hinaus umfasst die austrittsseitige Einstellvorrichtung eine Einrichtung, die in der Lage ist, die Röntgenstrahlenlinse drehend um zwei Achsen zu bewegen, die durch den eintrittsseitigen Brennpunkt der Röntgenstrahlenlinse und senkrecht zur optischen Achse der Röntgenstrahlenlinse verlaufen.

S. Xu et al.: "Alignment Protocol for Effective use of Hard X-ray Quad collimator for microcrystallography"; Optomechanics 2011: Innovations and Solutions, Proc. of SPIE Vol. 8125, 81250X, doi: 10.1117/12.894262 offenbart, dass ein Kollimator zu einer Strahlachse mittels zwei Winkelverstellungen und zwei translatorischen Verstellungen ausgerichtet wird. V. Ya. Shovkun et al.: "'STEND-70'-multifunction arrangement for the X-ray capillary products testing", X-ray and Neutron Capillary Optics II, Proc. of SPIE Vol. 5943, 59430N, doi: 10.1117/12.637928 offenbart, dass eine untersuchte Polykapillar-Linse mit einem manuellen Zwei-Achs-Goniometer ausgerichtet wird, welches auf einem computergesteuerten, motorisierten Y-Z-Translationsversteller befestigt ist.

Der Erfindung liegt nun die Aufgabe zugrunde, eine Vorrichtung zu schaffen, um mit einer ersten Justage einen optischen Eingangspunkt einer Röntgenoptik auf einen ersten vorbestimmten Punkt, z. B. einen Brennfleck einer Röntgenröhre justieren zu können und um anschließend mit einer zweiten Justage einen optischen Ausgangspunkt der Röntgenoptik auf einen zweiten vorbestimmten Punkt, z. B. eine Probe justieren zu können, ohne die erste Justage wesentlich zu beeinflussen.

Diese Aufgabe wird durch eine Vorrichtung und eine Apparatur mit den Merkmalen der unabhängigen Ansprüche gelöst. Weitere bevorzugte Ausgestaltungen der Erfindung ergeben sich aus den übrigen, in den Unteransprüchen genannten Merkmalen.

Die erfindungsgemäße Vorrichtung zur räumlichen Ausrichtung einer Röntgenoptik mit einem optischen Eingangspunkt und einem optischen Ausgangspunkt, umfasst:
- ein Aufnahmeelement zur Aufnahme und Fixierung der Röntgenoptik, sodass diese in einer Ausgangsposition in z-Richtung ausgerichtet ist und sich der Eingangspunkt auf wenigstens einer, durch die Vorrichtung konstruktiv vorbestimmten Schwenkachse befindet;
- einen, mit dem Aufnahmeelement verbundenen Parallelverschiebemechanismus zur Justage des Eingangspunkts der Röntgenoptik auf einen ersten vorbestimmten Punkt umfassend:
   - eine erste Parallelkinematik, ausgebildet zur Parallelverschiebung der Röntgenoptik in einer ersten, von der z-Richtung verschiedenen Parallelverschieberichtung,
   - eine zweite Parallelkinematik, ausgebildet zur Parallelverschiebung der Röntgenoptik in einer, von der z-Richtung und der ersten Parallelverschieberichtung verschiedenen, zweiten Parallelverschieberichtung;
- einen, mit dem Aufnahmeelement und dem Parallelverschiebemechanismus verbundenen Goniometermechanismus zur Justage des Ausgangspunkts der Röntgenoptik auf einen zweiten vorbestimmten Punkt, wobei der Goniometermechanismus eingerichtet ist, ein Verschwenken der Röntgenoptik um den Eingangspunkt auszuführen, umfassend:
   - eine erste Goniometerkinematik, ausgebildet, die Röntgenoptik um eine erste Schwenkachse zu verschwenken, wobei sich die erste Schwenkachse in einer, von der z-Richtung verschiedenen Richtung erstreckt.

Kennzeichnend ist vorgesehen, dass der Parallelverschiebemechanismus und der Goniometermechanismus koaxial ineinander angeordnet sind.

Im Rahmen der vorliegenden Erfindung wird auf ein raumfestes, dreidimensionales, kartesisches Koordinatensystems, umfassend einen Koordinatenursprung und davon ausgehend eine x-Achse, eine y-Achse und eine z-Achse Bezug genommen. Jede einzelne der Achsen ist zu den beiden anderen Achsen orthogonal angeordnet.

Unter dem Begriff "Richtung" wird in dieser Anmeldung, sofern nicht genauer ausgeführt, die raumfeste (ortsfeste) Richtung unabhängig vom Vorzeichen bezeichnet.

Eine x-Richtung bezeichnet eine Richtung, welche in Richtung der positiven oder negativen x-Achse zeigt.
Eine y-Richtung bezeichnet eine Richtung, welche in Richtung der positiven oder negativen y-Achse zeigt.
Eine z-Richtung bezeichnet eine Richtung, welche in Richtung der positiven oder negativen z-Achse zeigt.

Eine xy-Ebene ist eine Ebene, welche sich in x-Richtung und y-Richtung, also rechtwinklig zur z-Richtung erstreckt. Die x-Achse und die y-Achse können somit innerhalb der xy-Ebene oder parallel zu dieser verlaufen.

Eine xy-Richtung bezeichnet eine Richtung, welche in Richtung einer Erstreckung der xy-Ebene zeigt. Somit sind unendlich viele, voneinander verschiedene xy-Richtungen denkbar. Eine xy-Richtungen kann somit allgemein eine x-Komponente und eine y-Komponente, oder auch nur eine x-Komponente oder nur eine y-Komponente aufweisen. Eine xy-Richtung ist somit rechtwinklig auf die z-Richtung.

Röntgenoptiken sind Mittel zur Beeinflussung eines Strahlenganges von Röntgenstrahlung. Der optische Eingangspunkt ist ein eingangsseitiger Punkt, welcher eine definierte, also vorbestimmte räumliche Position mit Bezug zur Röntgenoptik aufweist. Typischerweise kann der Eingangspunkt von der Röntgenoptik beabstandet sein, also der Röntgenoptik bezogen auf die Strahlenausbreitung vorgelagert sein. Analog dazu ist der optische Ausgangspunkt ein ausgangsseitiger Punkt, welcher eine definierte, also vorbestimmte räumliche Position mit Bezug zur Röntgenoptik aufweist. Typischerweise kann der Ausgangspunkt von der Röntgenoptik beabstandet sein, also der Röntgenoptik bezogen auf die Strahlenausbreitung nachgelagert sein.

Der Eingangs- und der Ausgangspunkt können durch röntgenoptische Eigenschaften der Röntgenoptik definiert sein. Bevorzugt ist der Eingangspunkt ein Eingangsfokus und der Ausgangspunkt ein Ausgangsfokus. Ferner können der Eingangs- und der Ausgangspunkt auch Punkte sein, welche z. B. nur teilweise durch die Eigenschaften der Röntgenoptik festgelegt werden. Dies kann beispielsweise der Fall sein, wenn der Eingangs- und Ausgangspunkt auf einer Linsenachse, z. B. einer Symmetrieachse (also einer Mittenachse) der Röntgenoptik angeordnet sind, aber ihre Abstände von der Röntgenoptik nicht durch die Röntgenoptik selbst bestimmt werden. Die Abstände von der Röntgenoptik können aufgrund weiterer (z. B. von Umgebungsparametern beeinflussten) Überlegungen, oder auch beliebig festgelegt werden. Prinzipiell können als Eingangs- und der Ausgangspunkt je nach Anwendung auch beliebige, eingangs- und ausgangsseitige Punkte (mit vor der Justage festgelegten Positionen in Bezug zur Röntgenoptik) gewählt werden.

Vorzugsweise ist die Röntgenoptik eine Röntgenlinse. Ferner bevorzugt ist die Röntgenlinse eine Kapillar-Linse, insbesondere eine Polykapillar-Linse. Röntgenlinsen weisen als optischen Eingangspunkt einen Eingangsfokus und als optischen Ausgangspunkt einen Ausgangsfokus auf. Kapillar-Linsen weisen in ihrem Inneren wenigstens eine Kapillare, insbesondere eine Vielzahl an Kapillaren auf. Die Kapillaren der Kapillar-Linse sind typischerweise derart angeordnet und geformt, dass durch sie, mittels Totalreflexion hindurchtretende Röntgenstrahlen in dem Eingangsfokus aufgenommen und auf den Ausgangsfokus gelenkt werden.

Bevorzugt ist die Röntgenoptik eine HOPG-Optik (Highly Oriented Pyrolytic Graphite) oder eine HAPG-Optik (Highly Annealed Pyrolytic Graphite). Auch in diesem Fall ist der optische Eingangspunkt ein Eingangsfokus und der optische Ausgangspunkt ein Ausgangsfokus.

Vorzugsweise ist die Röntgenoptik eine elliptische Monokapillare. Die elliptische Monokapillare weist als optischen Eingangspunkt einen Quellen-Brennpunkt und als optischen Ausgangspunkt einen Ausgangs-Brennpunkt auf.

Ferner bevorzugt ist die Röntgenoptik eine zylindrische Monokapillare. Der optische Eingangs- und Ausgangspunkt der zylindrischen Monokapillare sind (wie bereits weiter oben allgemein bezüglich der Röntgenoptik definiert) eingangs- und ausgangsseitige Punkte mit einer definierten räumlichen Position mit Bezug zur Röntgenoptik. Vorzugsweise liegt zumindest der optische Eingangspunkt auf einer Symmetrieachse der Monokapillaren.

Unter der Ausrichtung der Röntgenoptik in z-Richtung in der Ausgangsposition wird vorliegend verstanden, dass die Röntgenoptik in der Ausgangsposition derart angeordnet ist, dass sich eine Achse der Röntgenoptik, z. B. eine Linsenachse, also eine Verbindungslinie, welche den Eingangspunkt mit dem Ausgangspunkt verbindet, in der z-Richtung erstreckt. Insbesondere ist der Ausgangspunkt der Röntgenoptik in positiver z-Richtung zum Eingangspunkt versetzt.

Ebenso weist typischerweise der zweite vorbestimmte Punkt eine Abstandskomponente in positiver z-Richtung zum ersten vorbestimmten Punkt auf. Die positive z-Richtung bezeichnet dabei jene Richtung, welche ausgehend vom Eingangspunkt zur Vorrichtung weist.

Unter der Ausgangsposition wird dabei eine Position der Röntgenoptik verstanden, von der ausgehend typischerweise die Justage der Röntgenoptik erfolgt. Vorzugsweise wird die Ausgangsposition durch eine Mittenlage eines insgesamt möglichen Verschiebe- oder Verdrehbereichs gekennzeichnet.

Das Aufnahmeelement ist vorzugsweise dazu ausgebildet, die Röntgenoptik aufzunehmen und zu fixieren. Dies kann z. B. form-, und/oder kraftschlüssig erfolgen. Insbesondere weist das Aufnahmeelement ein Gewinde zum Einschrauben der Röntgenoptik auf.

Die wenigstens eine Schwenkachse bezeichnet eine gedachte, nicht physische Schwenkachse, welche durch die konstruktiven Eigenschaften der Vorrichtung vorbestimmt ist und um welche die Röntgenoptik von dem Goniometermechanismus verschwenkt werden kann.

Die Justage des Eingangspunkt der Röntgenoptik auf einen (insbesondere ortsfesten) ersten vorbestimmten Punkt erfolgt, indem die Röntgenoptik mittels des Parallelverschiebemechanismus in einer ersten Parallelverschieberichtung und einer, von der ersten Parallelverschieberichtung verschiedenen, zweiten Parallelverschieberichtung parallel verschoben wird. Die beiden Parallelverschieberichtung zeigen in eine, von der z-Richtung verschiedene Raumrichtung. Die Parallelverschieberichtung kann jedoch unter anderem auch eine z-Komponente aufweisen.

Der erste vorbestimmten Punkt bezeichnet vorzugsweise einen Brennfleck einer Anode einer Röntgenröhre.

Durch den Parallelverschiebemechanismus erfolgt neben der Justage des Eingangspunkts der Röntgenoptik auch ein Verschieben der wenigstens einen Schwenkachse auf den ersten vorbestimmten Punkt.

Eine Justage in z-Richtung kann beispielsweise durch ein Abstandselement zwischen der Röntgenoptik und dem Aufnahmeelement bewirkt werden. Dies ist insbesondere von Vorteil, wenn die Röntgenoptik mit dem Aufnahmeelement über eine Schraubverbindung verbindbar ist, also die Röntgenoptik in das Aufnahmeelement einschraubbar ist. Die Justage in z-Richtung erfolgt üblicherweise vor der Justage in der ersten und der zweiten Parallelverschieberichtung.

Die Parallelverschiebung in der ersten Parallelverschieberichtung wird durch die erste Parallelkinematik ermöglicht, während die Parallelverschiebung in der zweiten Parallelverschieberichtung durch die zweite Parallelkinematik ermöglicht wird.

Die Parallelverschiebung erfolgt im Wesentlichen in einer ersten oder zweiten Parallelverschieberichtung. In der vorliegenden Anmeldung bedeutet "im Wesentlichen in einer Parallelverschieberichtung", dass die Parallelverschiebung hauptsächlich in der jeweiligen Parallelverschieberichtung erfolgt, jedoch auch, zu einem dazu relativ geringen Anteil in einer weiteren Richtung, also z. B. einer Richtung rechtwinklig zu der jeweiligen Parallelverschieberichtung erfolgen kann.

Der Goniometermechanismus dient zur Justage des Ausgangspunkts der Röntgenoptik auf einen (insbesondere ortsfesten) zweiten vorbestimmten Punkt. Dies erfolgt durch das Verschwenken der Röntgenoptik um den Eingangspunkt.

Der zweite vorbestimmte Punkt bezeichnet typischerweise einen virtuellen Punkt mit bestimmten geometrischen Eigenschaften innerhalb einer Messapparatur, welche die erfindungsgemäße Vorrichtung umfasst. Der zweite vorbestimmte Punkt befindet sich insbesondere in einer Messebene der Messvorrichtung und weist eine ausgezeichnete, also eine definierte Position zu anderen Komponenten der Messvorrichtung oder der Probe auf. Der zweite vorbestimmte Punkt bezeichnet typischerweise einen Punkt einer zu untersuchenden Probe, insbesondere einen Zielpunkt der Probenoberfläche.

Die Justage des Ausgangspunkts der Röntgenoptik auf den zweiten vorbestimmten Punkt wird realisiert, indem mittels der ersten Goniometerkinematik die Röntgenoptik wenigstens näherungsweise um eine erste, konstruktiv vorbestimmte Schwenkachse verschwenkt wird. Typischerweise wird vor dem Verschwenken der Röntgenoptik ihr Eingangspunkt mittels des Parallelverschiebemechanismus auf den ersten vorbestimmten Punkt ausgerichtet. Dabei fixiert das Aufnahmeelement die Röntgenoptik derart, dass sich auch nach der Parallelverschiebung der Eingangspunkt im Wesentlichen auf der Schwenkachse befindet - die Schwenkachse wird also mit dem Eingangspunkt mitverschoben. Im Wesentlichen verläuft nach der Justage mit dem Parallelverschiebemechanismus die Schwenkachse also durch den Eingangspunkt und den ersten vorbestimmten Punkt.

Somit ist der Goniometermechanismus dazu eingerichtet, wenigstens näherungsweise ein Verschwenken der Röntgenoptik um den Eingangspunkt auszuführen, derart, dass der Eingangspunkt wenigstens näherungsweise auf dem zuvor justierten (ortsfesten) ersten vorbestimmten Punkt verbleibt. Es bleibt also der Eingangspunkt auch nach dem Verschwenken um den Eingangspunkt im Wesentlichen auf den ersten vorbestimmten Punkt justiert.

Unter dem "wenigstens näherungsweisen Verschwenken um die Schwenkachse" kann vorliegend eine Rotationsbewegung oder eine Kombination aus einer Rotations- und einer Translationsbewegung verstanden werden. Die Goniometerkinematik ist jedoch derart ausgebildet, dass bei den typischerweise sehr kleinen durchgeführten Schwenkwinkeln der Röntgenoptik eine auftretende Translationsbewegung in Relation zur der jeweiligen, während des Verschwenkens ortsfesten Schwenkachse vernachlässigt werden kann.

Mittels der erfindungsgemäßen Vorrichtung wird eine Justage der Röntgenoptik, insbesondere eine 2-Punkt-Justage ermöglicht. Das heißt, es kann mittels derselben Vorrichtung sowohl der Eingangspunkt der Röntgenoptik, auf einen ersten vorbestimmten Punkt, insbesondere den Brennfleck der Anode, als auch der Ausgangspunkt auf einen zweiten vorbestimmten Punkt, insbesondere den Zielpunkt der Probenoberfläche justiert werden. Diese Justage entspricht einer Justage mit drei Freiheitsgraden.

Vorzugsweise ist die erste Parallelkinematik des Parallelverschiebemechanismus eine erste Parallelogrammführung und/oder die zweite Parallelkinematik des Parallelverschiebemechanismus eine zweite Parallelogrammführung.

Mittels Parallelogrammführungen kann mit relativ geringen Kosten und Platzbedarf eine Parallelverschiebung der Röntgenoptik realisiert werden. Durch die typische Kinematik der Parallelogrammführung beschreibt die Röntgenoptik bei der Parallelverschiebung in einer der Parallelverschieberichtungen auch stets eine dazu relativ geringe Parallelverschiebung in eine, zu der jeweiligen Parallelverschieberichtung rechtwinklige Richtung. Diese Parallelverschiebung in die rechtwinklige Richtung ist jedoch bei den typischerweise sehr kleinen vollführten Parallelverschiebungen in den Parallelverschieberichtungen und den dazu erforderlichen sehr kleinen Winkeländerungen innerhalb der Parallelogrammführung vernachlässigbar.

Die Parallelverschiebung in den Parallelverschieberichtungen beträgt vorzugsweise höchstens +- 3 mm, insbesondere höchstens +- 1 mm. Vorzugsweise beträgt eine Verdrehung der Verbindungselemente während der Parallelverschiebung höchstens +- 5 °, ferner bevorzugt höchstens +- 3 °, insbesondere höchstens +- 2 °. Die Parallelverschiebung in Richtung rechtwinkelig zu der Parallelverschiebung beträgt vorzugsweise höchstens 2 %, insbesondere höchstens 1 % der Verschiebung in der Parallelverschieberichtung.

Die Parallelogrammführungen umfassen insbesondere ein erstes und ein zweites Gegenelement, welche mittels eines Verbindungselementenpaares (insbesondere gelenkig) miteinander verbunden sind. Für eine ideale Funktionsweise weisen die beiden Verbindungselemente zwischen ihren jeweiligen beiden Verbindungen mit den Gegenelementen die gleiche Länge auf. Ebenso sind auch die Abstände auf Seiten der beiden Gegenelemente zwischen deren Verbindungen mit den Verbindungselementen gleich groß.

Entsprechend einer Parallelogrammführung ist eine erste Verbindungsebene, welche durch die gelenkigen Verbindungen auf Seiten des ersten Gegenelementes und in Richtung der jeweiligen Parallelverschieberichtung verläuft, parallel zu einer zweiten Verbindungsebene, welche durch die gelenkigen Verbindungen auf Seiten des zweiten Gegenelementes verläuft. Zudem verläuft eine weitere Ebene durch die, mit den Gegenelementen verbundenen Enden eines ersten Verbindungselements, deren beide Schnittgeraden mit den Verbindungsebenen rechtwinklig zu der Parallelverschieberichtung ausgerichtet sind. Eine weitere Ebene, welche durch die, mit den Gegenelementen verbundenen Enden des zweiten Verbindungselements verläuft, ist zu der Ebene des ersten Verbindungselements parallel. In der Ausgangsposition sind die Ebenen der Verbindungselemente zu den beiden Verbindungsebenen typischerweise rechtwinklig zueinander angeordnet. Betrachtet man diese vier Ebenen seitlich, also derart, dass diese als Geraden erscheinen, so bilden die vier Ebenen ein Parallelogramm. Bei einer Parallelverschiebung bleibt die erste Verbindungsebene zu der zweiten Verbindungsebene stets parallel. Ebenso bleiben die beiden Ebenen durch die Verbindungselemente stets parallel zueinander, ändern jedoch die Winkel zu den beiden Verbindungsebenen. Die Verbindungsebenen verlaufen bei, "klassischen" Gelenken durch Drehachsen oder Drehpunkte der gelenkigen Verbindungen, wobei die Drehachsen entlang der Verbindungsebenen und rechtwinklig zu den Parallelverschieberichtungen verlaufen. Die gelenkigen Verbindungen können vorzugsweise mittels Festkörpergelenken realisiert sein. Bei Festkörpergelenken verlaufen die Verbindungsebenen durch die Festkörpergelenke, insbesondere durch jene Enden der Festkörpergelenke, welche von den Verbindungselementen weg weisen.

Gemäß einer bevorzugten Ausgestaltung der Erfindung ist vorgesehen, dass die erste Parallelogrammführung zur Parallelverschiebung der Röntgenoptik in der ersten Parallelverschieberichtung
- ein erstes Gegenelement,
- ein zweites Gegenelement und
- ein, die beiden Gegenelemente verbindendes Verbindungselementenpaar
umfasst, wobei
- die Verbindungselemente des Verbindungselementenpaars in einer ersten Verbindungsebene jeweils über wenigstens ein erstes Ende mit dem ersten Gegenelement verbunden sind und
- die Verbindungselemente des Verbindungselementenpaars in einer, zur ersten Verbindungsebene parallelen und beabstandeten, zweiten Verbindungsebene, welche auf der, der wenigstens einen Schwenkachse abgewandten Seite der ersten Verbindungsebene angeordnet ist, jeweils über wenigstens ein zweites Ende mit dem zweiten Gegenelement verbunden sind und
- in der ersten Parallelverschieberichtung das wenigstens eine erste Ende eines der Verbindungselemente zu dem wenigstens einen ersten Ende des anderen Verbindungselements einen ersten Abstand aufweist und das wenigstens eine zweite Ende eines der Verbindungselemente zu dem wenigstens einen zweiten Ende des anderen Verbindungselements einen zweiten Abstand aufweist, wobei der erste Abstand gleich dem zweiten Abstand ist,
- in einer Ebene, welche entlang der ersten Parallelverschieberichtung und rechtwinkelig zu den Verbindungsebenen verläuft, die jeweiligen Abstände des jeweiligen, wenigstens einen ersten Endes zu dem jeweiligen, wenigstens einen zweiten Ende der Verbindungselemente gleich sind, und
- die erste Parallelogrammführung über eines ihrer Gegenelemente mit dem Aufnahmeelement mechanisch verbunden ist und somit die Parallelverschiebung der Röntgenoptik in der ersten Parallelverschieberichtung durch eine relative Parallelverschiebung des mit dem Aufnahmeelement mechanisch verbundenen Gegenelements zum anderen Gegenelement in der ersten Parallelverschieberichtung realisierbar ist.

Gemäß einer bevorzugten Ausgestaltung der Erfindung ist vorgesehen, dass die erste Parallelogrammführung zur Parallelverschiebung der Röntgenoptik in der ersten Parallelverschieberichtung
- ein erstes Gegenelement,
- ein zweites Gegenelement und
- ein, die beiden Gegenelemente verbindendes Verbindungselementenpaar umfasst, wobei
- die Verbindungselemente des Verbindungselementenpaars in einer ersten Verbindungsebene, welche entlang der ersten Parallelverschieberichtung verläuft, jeweils über wenigstens ein erstes Ende mit dem ersten Gegenelement verbunden sind und
- die Verbindungselemente des Verbindungselementenpaars in einer, zur ersten Verbindungsebene parallelen und beabstandeten, zweiten Verbindungsebene, welche auf der, der wenigstens einen Schwenkachse abgewandten Seite der ersten Verbindungsebene angeordnet ist, jeweils über wenigstens ein zweites Ende mit dem zweiten Gegenelement verbunden sind und
- in der ersten Parallelverschieberichtung das wenigstens eine erste Ende eines der Verbindungselemente zu dem wenigstens einen ersten Ende des anderen Verbindungselements einen ersten Abstand aufweist und das wenigstens eine zweite Ende eines der Verbindungselemente zu dem wenigstens einen zweiten Ende des anderen Verbindungselements einen zweiten Abstand aufweist, wobei der erste Abstand gleich dem zweiten Abstand ist, und
- die erste Parallelogrammführung über eines ihrer Gegenelemente mit dem Aufnahmeelement mechanisch verbunden ist und somit die Parallelverschiebung der Röntgenoptik in der ersten Parallelverschieberichtung durch eine relative Parallelverschiebung des mit dem Aufnahmeelement mechanisch verbundenen Gegenelements zum anderen Gegenelement in der ersten Parallelverschieberichtung realisierbar ist.

Gemäß einer weiteren bevorzugten Ausgestaltung der Erfindung ist vorgesehen, dass die zweite Parallelogrammführung zur Parallelverschiebung der Röntgenoptik in der zweiten Parallelverschieberichtung
- ein erstes Gegenelement,
- ein zweites Gegenelement und
- ein, die beiden Gegenelemente verbindendes Verbindungselementenpaar
umfasst, wobei
- die Verbindungselemente des Verbindungselementenpaars in einer ersten Verbindungsebene jeweils über wenigstens ein erstes Ende mit dem ersten Gegenelement verbunden sind und
- die Verbindungselemente des Verbindungselementenpaars in einer, zur ersten Verbindungsebene parallelen und beabstandeten, zweiten Verbindungsebene, welche auf der, der wenigstens einen Schwenkachse abgewandten Seite der ersten Verbindungsebene angeordnet ist, jeweils über wenigstens ein zweites Ende mit dem zweiten Gegenelement verbunden sind und
- in der zweiten Parallelverschieberichtung das wenigstens eine erste Ende eines der Verbindungselemente zu dem wenigstens einen ersten Ende des anderen Verbindungselements einen ersten Abstand aufweist und das wenigstens eine zweite Ende eines der Verbindungselemente zu dem wenigstens einen zweiten Ende des anderen Verbindungselements einen zweiten Abstand aufweist, wobei der erste Abstand gleich dem zweiten Abstand ist,
- in einer Ebene, welche entlang der zweiten Parallelverschieberichtung und rechtwinkelig zu den Verbindungsebenen verläuft, die jeweiligen Abstände des jeweiligen, wenigstens einen ersten Endes zu dem jeweiligen, wenigstens einen zweiten Ende der Verbindungselemente gleich sind, und
- die zweite Parallelogrammführung über eines ihrer Gegenelemente mit dem Aufnahmeelement mechanisch verbunden ist und somit die Parallelverschiebung der Röntgenoptik in der zweiten Parallelverschieberichtung durch eine relative Parallelverschiebung des mit dem Aufnahmeelement mechanisch verbundenen Gegenelements zum anderen Gegenelement in der zweiten Parallelverschieberichtung realisierbar ist.

Gemäß einer weiteren bevorzugten Ausgestaltung der Erfindung ist vorgesehen, dass die zweite Parallelogrammführung zur Parallelverschiebung der Röntgenoptik in der zweiten Parallelverschieberichtung
- ein erstes Gegenelement,
- ein zweites Gegenelement und
- ein, die beiden Gegenelemente verbindendes Verbindungselementenpaar
umfasst, wobei
- die Verbindungselemente des Verbindungselementenpaars in einer ersten Verbindungsebene, welche entlang der zweiten Parallelverschieberichtung verläuft, jeweils über wenigstens ein erstes Ende mit dem ersten Gegenelement verbunden sind und
- die Verbindungselemente des Verbindungselementenpaars in einer, zur ersten Verbindungsebene parallelen und beabstandeten, zweiten Verbindungsebene, welche auf der, der wenigstens einen Schwenkachse abgewandten Seite der ersten Verbindungsebene angeordnet ist, jeweils über wenigstens ein zweites Ende mit dem zweiten Gegenelement verbunden sind und
- in der zweiten Parallelverschieberichtung das wenigstens eine erste Ende eines der Verbindungselemente zu dem wenigstens einen ersten Ende des anderen Verbindungselements einen ersten Abstand aufweist und das wenigstens eine zweite Ende eines der Verbindungselemente zu dem wenigstens einen zweiten Ende des anderen Verbindungselements einen zweiten Abstand aufweist, wobei der erste Abstand gleich dem zweiten Abstand ist, und
- die zweite Parallelogrammführung über eines ihrer Gegenelemente mit dem Aufnahmeelement mechanisch verbunden ist und somit die Parallelverschiebung der Röntgenoptik in der zweiten Parallelverschieberichtung durch eine relative Parallelverschiebung des mit dem Aufnahmeelement mechanisch verbundenen Gegenelements zum anderen Gegenelement in der zweiten Parallelverschieberichtung realisierbar ist.

Eines der Gegenelemente ist somit jener Teil der Parallelkinematik, welcher (zum anderen Gegenelement) parallel verschiebbar ist. Das Aufnahmeelement ist mit den parallel verschiebbaren Gegenelementen mechanisch verbunden. Die Verbindungselemente des Verbindungselementenpaars sind Schenkel, welche die beiden Gegenelemente miteinander verbinden.

An den Enden der Verbindungselemente sind die Verbindungselemente mit den Gegenelementen verbunden. Diese Verbindung ist derart ausgeführt, dass wenigstens näherungsweise eine Verdrehung der Verbindungselemente relativ zu den Gegenelementen ermöglicht wird. Die näherungsweise Verdrehung kann dabei einen rotatorischen und einen translatorischen Anteil aufweisen. Der rotatorische Anteil weist dabei einen Vektor auf, welcher in Richtung parallel zu einer der Verbindungsebenen und rechtwinklig zu der Parallelverschieberichtung zeigt. Der Vektor steht dabei rechtwinklig auf eine Ebene, in welcher die Rotation erfolgt.

Ein Verbindungselement weist wenigstens ein erstes Ende (also ein erstes Ende oder mehrere erste Enden) und wenigstens ein zweites Ende (also eine zweites Ende oder mehrere zweite Enden) auf. Bei mehreren ersten und/oder zweiten Enden pro Verbindungselement sind jeweils die ersten Enden und/oder die zweiten Enden in einer Richtung parallel zu den Verbindungsebenen und rechtwinklig zu der ersten Parallelverschieberichtung zueinander versetzt angeordnet. Somit liegen auch die ersten und zweiten Enden des jeweiligen Verbindungselements in einer Ebene.

In einer Ausgangsposition bildet eine Ebene durch die Enden des jeweiligen Verbindungselementes vorzugsweise einen rechten Winkel zu den Verbindungsebenen.

Vorzugsweise ist vorgesehen, dass
- das erste Gegenelement der ersten Parallelogrammführung und das erste Gegenelement der zweiten Parallelogrammführung oder
- das zweite Gegenelement der ersten Parallelogrammführung und das zweite Gegenelement der zweiten Parallelogrammführung
zueinander unbeweglich miteinander verbunden oder einstückig ausgeführt sind.

Somit sind die beiden Parallelogrammführungen über deren jeweiliges erstes oder zweites Gegenelement miteinander verbunden, oder die beiden Parallelführungen teilen sich ein erstes oder zweites Gegenelement. Dies resultiert in einem platzsparend kompakten, ineinander verschachtelten Aufbau der beiden Parallelogrammführungen. Dadurch kann eine weitere Verlängerung eines Strahlengangs verhindert werden.

Die beiden Gegenelemente der Parallelogrammführungen, welche nicht unbeweglich miteinander verbunden oder einstückig ausgeführt sind, sind typischerweise in einer Richtung rechtwinklig zu den Verbindungsebenen zueinander beabstandet, sodass eine Relativbewegung zwischen ihnen ermöglicht ist.

Vorzugsweise umfasst der Goniometermechanismus eine zweite Goniometerkinematik, welche ausgebildet ist, die Röntgenoptik wenigstens näherungsweise um eine zweite Schwenkachse zu verschwenken, wobei sich die zweite Schwenkachse in eine, von der z-Richtung und der ersten Schwenkachse verschiedene Richtung erstreckt.

Die mittels der Vorrichtung ermöglichte Justage, entspricht somit einer Justage mit vier Freiheitsgraden.

Bevorzugt ist die erste Goniometerkinematik (insbesondere in der Ausgangsposition) eine erste gleichschenklige, symmetrische trapezförmige Führung und/oder die zweite Goniometerkinematik (insbesondere in der Ausgangsposition) eine zweite gleichschenklige, symmetrische, trapezförmige Führung.

Mittels trapezförmigen Führungen kann mit relativ geringen Kosten und Platzbedarf wenigstens näherungsweise eine Schwenkbewegung der Röntgenoptik realisiert werden. Durch die Kinematik der trapezförmigen Führung beschreibt die Röntgenoptik bei der Schwenkbewegung auch stets eine relativ geringe translatorische Bewegung. Um die translatorische Bewegung in beide Schwenkrichtungen möglichst gleich und klein zu halten, wird die Ausgangsposition so gewählt, dass die Führung eine gleichschenklige, symmetrische, trapezförmige Form beschreibt. Bei einem Verschwenken der Röntgenoptik werden die beiden, in der Ausgangsposition noch parallelen Seiten der trapezförmigen Führung zueinander leicht verschwenkt. Die trapezförmige Führung kann also allgemein auch als eine Viereckführung mit einem Paar gleich langer gegenüberliegender Seiten bezeichnet werden.

Die translatorische Bewegung bei der Verschwenkung kann in der Praxis bei kleinen Schwenkwinkeln der Röntgenoptik vernachlässigt werden. Der Schwenkwinkel beträgt vorzugsweise höchstens +- 5 °, insbesondere höchstens +- 2 °. Die Translation des Eingangspunkts bezogen auf die Schwenkachse beträgt vorzugsweise höchstens +- 0,2 mm / °, insbesondere höchstens +- 0,1 mm / °. Vorzugsweise beträgt eine Verdrehung der Verbindungselemente bezogen auf ein stillstehendes Gegenelement (und ausgehend von der Ausgangslage) während der Goniometerbewegung höchstens +- 5°, ferner bevorzugt höchstens +- 3 °, insbesondere höchstens +- 2 °. Je kleiner die Verschwenkung ist, desto geringer ist ein Betrag der translatorische Bewegung zwischen dem Eingangspunkt und dem ersten vorbestimmten Punkt, auf welchen der Eingangspunkt mittels des Parallelverschiebemechanismus justiert wurde.

Die trapezförmigen Führungen umfassen insbesondere ein erstes und ein zweites Gegenelement, welche mittels eines Verbindungselementenpaares (insbesondere gelenkig) miteinander verbunden sind. Die gelenkigen Verbindungen können insbesondere mittels Festkörpergelenken realisiert sein. Für eine ideale Funktionsweise weisen die beiden Verbindungselemente zwischen ihren jeweiligen beiden Verbindungen mit den Gegenelementen die gleiche Länge auf. Der Abstand auf Seiten des Gegenelements, welches der Drehachse zugewandt ist, und zwischen den Verbindungen mit den Verbindungselementen ist jedoch geringer als der entsprechende Abstand auf Seiten des anderen Gegenelements.

Entsprechend einer trapezförmigen Führung verläuft eine erste Verbindungsebene parallel zu der Schwenkachse der Führung und durch die gelenkigen Verbindungen auf Seiten des ersten Gegenelementes. Ebenso verläuft eine zweite Verbindungsebene parallel zu der Schwenkachse der Führung und durch die gelenkigen Verbindungen auf Seiten des zweiten Gegenelementes. Die erste Verbindungsebene ist zwischen der Schwenkachse und der zweiten Verbindungsebene angeordnet. Zudem verläuft eine weitere Ebene durch die, mit den Gegenelementen verbundenen Enden eines ersten Verbindungselements, deren beide Schnittgeraden mit den Verbindungsebenen in Richtung der Schwenkachse ausgerichtet sind. Eine weitere Ebene verläuft durch die, mit den Gegenelementen verbundenen Enden des zweiten Verbindungselements, deren beide Schnittgeraden mit den Verbindungsebenen in Richtung der Schwenkachse ausgerichtet sind. Entlang der ersten Verbindungsebene ist ein erster Abstand der beiden Ebenen durch die Verbindungselemente kleiner als ein zweiter Abstand der beiden Ebenen entlang der zweiten Verbindungsebene. Zudem ist ein Abstand zwischen den gelenkigen Verbindungen des ersten Verbindungselementes mit dem ersten Gegenelement und mit dem zweiten Gegenelement entlang der Ebene des Verbindungselements gleich dem entsprechenden Abstand des zweiten Verbindungselements. Die Verbindungsebenen verlaufen bei, "klassischen" Gelenken durch Drehachsen oder Drehpunkte der gelenkigen Verbindungen, wobei die Drehachsen in Richtung der Schwenkachsen verlaufen. Die gelenkigen Verbindungen können insbesondere mittels Festkörpergelenken realisiert sein. Bei Festkörpergelenken verlaufen die Verbindungsebenen durch die Festkörpergelenke, insbesondere durch jene Enden der Festkörpergelenke, welche von den Verbindungselementen weg weisen.

In der Ausgangsposition sind die beiden Verbindungsebenen typischerweise parallel zueinander angeordnet. Betrachtet die insgesamt vier Ebenen seitlich, also derart, dass diese als Geraden erscheinen, so bilden die vier Ebenen ein gleichschenkliges, symmetrisches Trapez.

Bei einer Goniometerbewegung ändern sich die Winkel zwischen den beiden Verbindungselementen und den beiden Gegenelementen. Dadurch führt ein Gegenelement in Relation zum anderen Gegenelement die Goniometerbewegung aus.

Gemäß einer bevorzugten Ausgestaltung der Erfindung ist vorgesehen, dass die erste trapezförmige Führung zur wenigstens näherungsweisen Verschwenkung der Röntgenoptik um die erste Schwenkachse
- ein erstes Gegenelement,
- ein zweites Gegenelement und
- ein, die beiden Gegenelemente verbindendes Verbindungselementenpaar
umfasst, wobei
- die Verbindungselemente des Verbindungselementenpaars in einer ersten Verbindungsebene, welche in Richtung der Erstreckung der ersten Schwenkachse verläuft, jeweils über wenigstens ein erstes Ende mit dem ersten Gegenelement verbunden sind und
- die Verbindungselemente des Verbindungselementenpaars in einer zweiten Verbindungsebene, welche in Richtung der Erstreckung der ersten Schwenkachse verläuft und (im Bereich der ersten trapezförmigen Führung) auf der, der ersten Schwenkachse abgewandten Seite der ersten Verbindungsebene angeordnet und zur ersten Verbindungsebene beabstandet ist, jeweils über wenigstens ein zweites Ende mit dem zweiten Gegenelement verbunden sind und
- in einer Richtung verlaufend entlang der ersten Verbindungsebene und rechtwinklig zu der ersten Schwenkachse das wenigstens eine erste Ende eines der Verbindungselemente zu dem wenigstens einen ersten Ende des anderen Verbindungselements einen ersten Abstand aufweist und in einer Richtung verlaufend entlang der zweiten Verbindungsebene und rechtwinklig zu der ersten Schwenkachse das wenigstens eine zweite Ende eines der Verbindungselemente zu dem wenigstens einen zweiten Ende des anderen Verbindungselements einen zweiten Abstand aufweist, wobei der erste Abstand kleiner als der zweite Abstand ist, und
- in Richtungen entlang des Verlaufs einer Ebene, welche rechtwinklig zu der ersten Schwenkachse verläuft, die jeweiligen Abstände des jeweiligen, wenigstens einen ersten Endes zu dem jeweiligen, wenigstens einen zweiten Ende der Verbindungselemente gleich sind, und
- die erste trapezförmige Führung über eines ihrer Gegenelemente mit dem Aufnahmeelement mechanisch verbunden ist und somit die näherungsweise Verschwenkung der Röntgenoptik um die erste Schwenkachse durch eine Verschwenkung des mit dem Aufnahmeelement mechanisch verbundenen Gegenelements zum anderen Gegenelement realisierbar ist.

Gemäß einer weiteren bevorzugten Ausgestaltung der Erfindung ist vorgesehen, dass die zweite trapezförmige Führung zur wenigstens näherungsweisen Verschwenkung der Röntgenoptik um die zweite Schwenkachse
- ein erstes Gegenelement,
- ein zweites Gegenelement und
- ein, die beiden Gegenelemente verbindendes Verbindungselementenpaar
umfasst, wobei
- die Verbindungselemente des Verbindungselementenpaars in einer ersten Verbindungsebene, welche in Richtung der Erstreckung der zweiten Schwenkachse verläuft jeweils über wenigstens ein erstes Ende mit dem ersten Gegenelement verbunden sind und
- die Verbindungselemente des Verbindungselementenpaars in einer zweiten Verbindungsebene, welche in Richtung der Erstreckung der zweiten Schwenkachse verläuft und (im Bereich der zweiten trapezförmigen Führung) auf der, der zweiten Schwenkachse abgewandten Seite der ersten Verbindungsebene angeordnet und zur ersten Verbindungsebene beabstandet ist, jeweils über wenigstens ein zweites Ende mit dem zweiten Gegenelement verbunden sind und
- in einer Richtung verlaufend entlang der ersten Verbindungsebene und rechtwinklig zu der zweiten Schwenkachse das wenigstens eine erste Ende eines der Verbindungselemente zu dem wenigstens einen ersten Ende des anderen Verbindungselements einen ersten Abstand aufweist und in einer Richtung verlaufend entlang der zweiten Verbindungsebene und rechtwinklig zu der zweiten Schwenkachse das wenigstens eine zweite Ende eines der Verbindungselemente zu dem wenigstens einen zweiten Ende des anderen Verbindungselements einen zweiten Abstand aufweist, wobei der erste Abstand kleiner als der zweite Abstand ist, und
- in Richtungen entlang des Verlaufs einer Ebene, welche rechtwinklig zu der zweiten Schwenkachse verläuft, die jeweiligen Abstände des jeweiligen, wenigstens einen ersten Endes zu dem jeweiligen, wenigstens einen zweiten Ende der Verbindungselemente gleich sind, und
- die zweite trapezförmige Führung über eines ihrer Gegenelemente mit dem Aufnahmeelement mechanisch verbunden ist und somit die näherungsweise Verschwenkung der Röntgenoptik um die erste Schwenkachse durch eine Verschwenkung des mit dem Aufnahmeelement mechanisch verbundenen Gegenelements zum anderen Gegenelement realisierbar ist.

Die ersten Verbindungsebenen verlaufen beabstandet zu der jeweiligen Schwenkachse. Die Bezeichnung einer Richtung, welche "entlang" einer Ebene verläuft, kann auch als eine Richtung, welche parallel zu dieser Ebene verläuft gelesen werden.

Eines der Gegenelemente ist somit jener Teil der trapezförmigen Führung, welches zum anderen Gegenelement die Schwenkbewegung um die jeweilige Schwenkachse ausführen kann. Das Aufnahmeelement ist mit den parallel verschiebbaren Gegenelementen mechanisch verbunden, insbesondere integral verbunden. Die Verbindungselemente des Verbindungselementenpaars sind Schenkel, welche die beiden Gegenelemente miteinander verbinden.

An den Enden der Verbindungselemente sind die Verbindungselemente mit den Gegenelementen verbunden. Diese Verbindung ist derart ausgeführt, dass wenigstens näherungsweise eine Verdrehung der Verbindungselemente relativ zu den Gegenelementen ermöglicht wird. Die näherungsweise Verdrehung kann dabei einen rotatorischen und einen translatorischen Anteil aufweisen. Der rotatorische Anteil weist dabei einen Vektor auf, welcher in Richtung parallel zu der Schwenkachse zeigt. Der Vektor steht dabei rechtwinklig auf eine Ebene, in welcher die Rotation erfolgt.

Ein Verbindungselement weist wenigstens ein erstes Ende (also eine erstes Ende oder mehrere erste Enden) und wenigstens ein zweites Ende (also eine zweites Ende oder mehrere zweite Enden) auf. Bei mehreren ersten und/oder zweiten Enden pro Verbindungselement sind jeweils die ersten Enden und/oder die zweiten Enden in Richtung der jeweiligen Schwenkachse der Führung versetzt angeordnet. Somit liegen auch die ersten und zweiten Enden des jeweiligen Verbindungselements in einer Ebene. Diese Ebene erstreckt sich somit ebenfalls in Richtung der jeweiligen Schwenkachse.

In der Ausgangsposition sind die erste und die zweite Verbindungsebene der jeweiligen trapezförmigen Führung typischerweise parallel zueinander angeordnet. Somit erscheint das Trapez als symmetrisches, gleichschenkliges Trapez.

Vorzugsweise ist vorgesehen, dass
- das erste Gegenelement der ersten trapezförmigen Führung und das erste Gegenelement der zweiten trapezförmigen Führung oder
- das zweite Gegenelement der ersten trapezförmigen Führung und das zweite Gegenelement der zweiten trapezförmigen Führung
zueinander unbeweglich miteinander verbunden oder einstückig ausgeführt sind.

Somit sind die beiden trapezförmigen Führungen über deren jeweiliges erstes oder zweites Gegenelement miteinander verbunden, oder die beiden trapezförmigen Führungen teilen sich ein erstes oder zweites Gegenelement. Dies resultiert in einem platzsparend kompakten, ineinander verschachtelten Aufbau der beiden Parallelogrammführungen.

Die beiden Gegenelemente der trapezförmigen Führungen, welche nicht unbeweglich miteinander verbunden oder einstückig ausgeführt sind, sind typischerweise in einer Richtung rechtwinklig zu einer der Verbindungsebenen der nicht verbundenen Gegenelemente zueinander beabstandet, sodass eine Relativbewegung zwischen ihnen ermöglicht ist.

Vorzugsweise ist vorgesehen, dass wenigstens zwei der Führungen jeweils ein erstes Gegenelement und ein zweites Gegenelement umfassen, welche mittels eines Verbindungselementenpaares der jeweiligen Führung miteinander verbunden sind, Das Verbindungselementenpaar kann die Gegenelemente beweglich, insbesondere gelenkig verbinden. Die gelenkige Verbindung kann mittels ("klassischen") Gelenken oder Festkörpergelenken ausgeführt sein. Ferner kann das Verbindungselementenpaar verglichen mit den Gegenelementen relativ biegeweich ausgeführt sein.

Ferner bevorzugt ist vorgesehen, dass die ersten Gegenelemente zwischen dem zweiten Gegenelement der jeweiligen Führung und der ersten Schwenkachse angeordnet sind. Somit sind die ersten Gegenelemente auf einer der ersten Schwenkachse zugewandten Seite und die zweiten Gegenelemente auf einer von der ersten Schwenkachse abgewandten Seite.

Vorzugsweise ist vorgesehen, dass zwei der ersten Gegenelemente oder zwei der zweiten Gegenelemente der wenigstens zwei Führungen unbeweglich miteinander verbunden oder einstückig ausgeführt sind. Somit ist eine Kopplung der die ersten oder zweiten Gegenelemente umfassenden Führungen gegeben. Sollen mehr als zwei Führungen miteinander über ihre Gegenelemente verbunden werden, so können auch erste Gegenelemente und zweite Gegenelemente der Führungen unbeweglich miteinander verbunden oder einstückig ausgeführt sein. Beispielsweise kann das erste Gegenelement der zweiten Parallelogrammführung mit dem ersten Gegenelement der ersten trapezförmigen Führung und das zweite Gegenelement der zweiten Parallelogrammführung mit dem zweiten Gegenelement der ersten Parallelogrammführung unbeweglich verbunden oder einstückig ausgeführt sein.

Gemäß einer bevorzugten Ausgestaltung der Erfindung ist vorgesehen, dass wenigstens zwei der Führungen verdreht zueinander und/oder ineinander angeordnet sind. Die Führungen können um die Linse, insbesondere um die Linsenachse verdreht zueinander angeordnet sein. Insbesondere sind die Führungen derart ineinander angeordnet, dass die innere Führung zwischen den Verbindungselementen der äußeren Führung angeordnet ist. Dadurch ergibt sich ein besonders kompakter Aufbau der Vorrichtung.

Ferner bevorzugt ist vorgesehen, dass entlang einer mechanischen Verbindungsabfolge, ausgehend von dem Aufnahmeelement hin zu einem, zur Fixierung der Vorrichtung vorgesehenen, ersten oder zweiten Gegenelement, das Aufnahmeelement mit einem ersten oder zweiten Gegenelement (insbesondere unbeweglich) verbunden oder einstückig ausgeführt ist und von diesem ausgehend alternierend die zu den Parallelogrammführungen und/oder trapezförmigen Führungen gehörigen ersten Gegenelemente (insbesondere unbeweglich) miteinander verbunden oder einstückig ausgeführt sind und/oder die zweiten Gegenelemente (insbesondere unbeweglich) miteinander verbunden oder einstückig ausgeführt sind.

Das bedeutet, dass, wenn das Aufnahmeelement beispielsweise mit einem ersten Gegenelement verbunden oder einstückig ausgeführt ist, das zweite Gegenelement derselben Kinematik mit einem zweiten Gegenelement einer nächsten Kinematik verbunden oder einstückig ausgeführt ist. Das erste Gegenelement dieser nächsten Kinematik ist wiederum mit einem ersten Gegenelement einer weiteren Kinematik verbunden oder einstückig ausgeführt und so weiter. Dieses Schema wird fortgeführt, bis nur mehr ein Gegenelement einer Kinematik übrig bleibt. Diese Gegenelement ist zur Fixierung der Vorrichtung vorgesehen.

In einer ferner bevorzugten Ausgestaltung ist vorgesehen, dass
- das Aufnahmelement mit dem ersten Gegenelement der ersten trapezförmigen Führung (insbesondere unbeweglich) verbunden oder einstückig ausgeführt ist,
- das zweite Gegenelement der ersten trapezförmigen Führung mit dem zweiten Gegenelement der zweiten trapezförmigen Führung (insbesondere unbeweglich) verbunden oder einstückig ausgeführt ist,
- das erste Gegenelement der zweiten trapezförmigen Führung mit dem ersten Gegenelement der ersten Parallelogrammführung (insbesondere unbeweglich) verbunden oder einstückig ausgeführt ist,
- das zweite Gegenelement der ersten Parallelogrammführung mit dem zweiten Gegenelement der zweiten Parallelogrammführung (insbesondere unbeweglich) verbunden oder einstückig ausgeführt ist, und
- das erste Gegenelement der zweiten Parallelogrammführung zur Fixierung der Vorrichtung vorgesehen ist.

Somit werden bei einer zunächst durchgeführten Parallelverschiebung mittels der Parallelogrammführungen die trapezförmigen Führungen mitverschoben.

Vorzugsweise ist vorgesehen, dass die Vorrichtung ferner Einstellelemente umfasst, welche ausgebildet sind,
- eine erste Einstellkraft in das erste Gegenelement der ersten Parallelogrammführung einzuleiten, wobei die erste Einstellkraft eine Komponente in der ersten Parallelverschieberichtung aufweist (wodurch die Parallelverschiebung der Röntgenoptik in der ersten Parallelverschieberichtung durchführbar ist), und
- eine zweite Einstellkraft in das erste Gegenelement der ersten Parallelogrammführung einzuleiten, wobei die zweite Einstellkraft eine Komponente in der zweiten Parallelverschieberichtung aufweist, welche über die Verbindungselemente der ersten Parallelogrammführung an das zweite Gegenelement der ersten und der zweiten Parallelogrammführung leitbar ist (wodurch die Parallelverschiebung der Röntgenoptik in der zweiten Parallelverschieberichtung durchführbar ist); und/oder
- eine dritte Einstellkraft in das erste Gegenelement der ersten trapezförmigen Führung einzuleiten, wobei die dritte Einstellkraft eine Komponente rechtwinklig zu der ersten Schwenkachse und parallel zu einer der Verbindungsebenen der ersten trapezförmigen Führung aufweist (wodurch das näherungsweise Verschwenken der Röntgenoptik um die erste Schwenkachse durchführbar ist),
   und
- eine vierte Einstellkraft in das erste Gegenelement der ersten trapezförmigen Führung einzuleiten, wobei die vierte Einstellkraft eine Komponente rechtwinklig zu der zweiten Schwenkachse und parallel zu einer der Verbindungsebenen der zweiten trapezförmigen Führung aufweist, welche über die Verbindungselemente der ersten trapezförmigen Führung an das zweite Gegenelement der ersten und der zweiten trapezförmigen Führung leitbar ist (wodurch das näherungsweise Verschwenken der Röntgenoptik um die zweite Schwenkachse durchführbar ist).

Die Komponente der dritten und der vierten Einstellkraft verlaufen insbesondere rechtwinklig zu der ersten Schwenkachse und parallel zu der Verbindungsebene des zu verschwenkenden Gegenelements. Insbesondere verläuft die Komponente der dritten Einstellkraft parallel zum ersten Gegenelement und die Komponente der vierten Einstellkraft parallel zum zweiten Gegenelement. Vorzugsweise entsprechen die Beträge der Komponenten im Wesentlichen den jeweiligen Beträgen der Einstellkräfte.

Bevorzugt sind die Einstellelemente Feingewindespindeln. Dadurch kann eine genaue Justage vorgenommen werden.

Dadurch, dass die Einstellelemente die jeweilige Einstellkraft in das jeweilige erste Gegenelement der Parallelogrammführungen und/oder trapezförmigen Führungen einleiten, also in das Gegenelement zwischen dem zweiten Gegenelement und den Schwenkachsen einleiten, sind die Einstellelemente an dem selben Endabschnitt der Mechaniken angeordnet. Dadurch kann online justiert werden.

Die Einstellkräfte bewirken die Parallelverschiebung oder die Verschwenkung des jeweiligen Gegenelementes. Die Einstellkräfte können beispielsweise mittels Federelementen, welche dazu ausgebildet sind, eine Federkraft in das jeweilige (erste) Gegenelement einzubringen aufgenommen werden. Die Federkräfte weisen jeweils eine Komponente mit einer, der Komponente der Einstellkraft entgegengesetzten Orientierung auf. Somit wird bei einer Parallelverschiebung oder Verschwenkung die Federkraft solange erhöht oder verringert, bis eine ausreichende Parallelverschiebung oder Verschwenkung erreicht wurde. Durch eine Kompression oder Expansion der Federelemente wird die Federkraft auf bekannte Weise erhöht oder verringert, bis sich das statische Gleichgewicht einstellt.

Als Gegenlager für die erste und zweite Einstellkraft und/oder als Gegenlager für die dritte und vierte Einstellkraft kann vorzugsweise ein einziges Federelement vorgesehen sein. Das Federelement wirkt dabei auf das erste Gegenelement und weist eine Federkraft mit Komponenten auf, welche entgegengerichtet zu den oben beschriebenen Komponenten der ersten und zweiten Einstellkraft und/oder der dritten und vierten Einstellkraft sind.

Vorzugsweise ist vorgesehen, dass die Verbindungselemente der Verbindungselementenpaare jeweils über Enden der Verbindungselemente mit den ersten Gegenelementen und den zweiten Gegenelementen verbunden sind. Die Enden können dabei spezielle Eigenschaften aufweisen, welche die Verbindung zwischen den Verbindungselementen und den Gegenelementen optimieren.

Bevorzugt ist vorgesehen, dass die Enden der Verbindungselemente Gelenke oder Festkörpergelenke aufweisen, insbesondere je Ende ein Gelenk oder Festkörpergelenk aufweisen. Somit sind die Verbindungselemente mit dem ersten und dem zweiten Gegenelement mittels der Gelenke oder der Festkörpergelenke verbunden. Festkörpergelenke weisen den Vorteil einer spielfreien Führung auf, zudem muss beim Betätigen der Gelenke kein Losbrechmoment überwunden werden. Insbesondere durch die Festkörpergelenke wird zudem eine Reduzierung der Teilezahl gegenüber "klassischen" Kinematiken ermöglicht. Die Festkörpergelenke sind insbesondere zwischen den beiden Verbindungsebenen angeordnet und werden vorzugsweise auf ihren, den Verbindungselementen abgewandten Seiten von den Verbindungsebenen begrenzt.

Die Festkörpergelenke sind insbesondere Flachkörper, deren Hauptflächen (die Flächen mit dem größten Flächeninhalt) bei einer Parallelführung bevorzugt im Wesentlichen in Richtung der Parallelverschieberichtung (beide Vorzeichen) weisen. Bei einer trapezförmigen Führung weisen die Hauptflächen bevorzugt im Wesentlichen in eine Richtung, welche sich entlang der jeweiligen Verbindungsebene und rechtwinklig zu der Schwenkachse erstreckt. Mit anderen Worten erstrecken sich die Festkörpergelenke mit deren Hauptausdehnungen entlang Ebenen, welche rechtwinkelig auf die jeweilige Verbindungsebene und rechtwinkelig zu der jeweiligen Parallelverschieberichtung oder in Richtung der jeweiligen Schwenkachse verlaufen. Somit ist eine Nachgiebigkeit der Festkörpergelenke in Richtung der Parallelverschieberichtung oder in einer Richtung rechtwinklig zu der Schwenkachse entlang der jeweiligen Verbindungsebene geringer als in anderen Richtungen. Dadurch wird eine gezielte Verbiegung in der gewünschten Richtung bei relativ geringem Kraftaufwand ermöglicht.

Damit die beiden Verbindungsebenen einer Parallelogrammführung auch nach einer Parallelverschiebung noch parallel sind, oder die trapezförmige Führung beim Verschwenken in beiden Richtungen die selbe Charakteristik aufweist, bedarf es einer definierten Dimensionierung der Festkörpergelenke. Als Kriterium kann gelten, dass in einer Ebene, welche in Richtung der Parallelverschieberichtung und rechtwinklig zu den Verbindungsebenen verläuft, bei der Parallelverschiebung der Abstand zwischen dem wenigstens einen ersten Ende und dem wenigstens einen zweiten Ende eines Verbindungselements gleich einem Abstand zwischen dem wenigstens einen ersten Ende und dem wenigstens einen zweiten Ende des anderen Verbindungselements bleibt. Dazu weisen die Festkörpergelenke eines Verbindungselementes bei der Parallelverschiebung insbesondere die gleiche Biegelinie auf wie die die Festkörpergelenke des anderen Verbindungselementes. Um dies sicherzustellen können identische Festkörpergelenke verwendet werden und die Verbindungselemente die gleichen Längserstreckungen zwischen den Festkörpergelenken aufweisen. Die Verbindungselemente sind vorzugsweise in Relation zu den Festkörpergelenken im Wesentlichen starr, können alternativ jedoch auch selbst, zwischen den Enden als Festkörpergelenke ausgebildet sein.

Bei "gewöhnlichen" Gelenken besteht beispielsweise die Möglichkeit, die Gegenelemente mittels Drehgelenken oder Kugelgelenken an die Verbindungselemente zu koppeln.

Vorzugsweise sind die beiden Parallelverschieberichtungen rechtwinklig zueinander angeordnet. Dadurch wird einfache Justage des Eingangspunkt der Röntgenoptik auf den ersten vorbestimmten Punkt gewährleistet.

Bevorzugt ist vorgesehen, dass
- die erste Parallelverschieberichtung in Richtung einer Erstreckung einer xy-Ebene verläuft und/oder
- die zweite Parallelverschieberichtung in Richtung einer Erstreckung der xy-Ebene verläuft und insbesondere die zweite Parallelverschieberichtung zu der ersten Parallelverschieberichtung einen rechten Winkel ausbildet.

Durch eine Parallelverschieberichtung welche in einer xy-Ebene verläuft, ist eine Parallelverschiebung der Röntgenoptik rechtwinklig zu ihrer Ausrichtung in Z-Richtung möglich. Die erste Parallelverschieberichtung kann demnach in eine erste xy-Richtung und die zweite Parallelverschieberichtung in eine zweite xy-Richtung verlaufen.

Vorzugsweise ist die erste xy-Richtung zur zweiten xy-Richtung orthogonal. Dadurch kann die Röntgenoptik mittels den Parallelkinematiken in zwei zueinander orthogonale xy-Richtungen parallel verschoben werden.

Vorzugsweise sind die beiden Schwenkachsen rechtwinklig zueinander angeordnet. Dadurch wird eine einfache Justage des Ausgangspunkt der Röntgenoptik auf den zweiten vorbestimmten Punkt gewährleistet.

Gemäß einer bevorzugten Ausgestaltung der Erfindung ist vorgesehen, dass
- die erste Schwenkachse zumindest in der Ausgangsposition in Richtung einer Erstreckung einer xy-Ebene verläuft und/oder
- die zweite Schwenkachse zumindest in der Ausgangsposition in Richtung einer Erstreckung der xy-Ebene verläuft und insbesondere die zweite Schwenkachse zu der ersten Schwenkachse einen rechten Winkel ausbildet.

Somit ist eine Verschwenkung der Röntgenoptik in einer z-Ebene durchführbar. Die z-Ebene ist eine Ebene, welche sich rechtwinklig zu der, in der xy-Ebene verlaufenden Drehachse erstreckt. Die erste Schwenkachse kann demnach in eine erste xy-Richtung und die zweite Parallelverschieberichtung in eine zweite xy-Richtung verlaufen, welche insbesondere orthogonal zueinander sind.

Vorzugsweise ist vorgesehen, dass die Parallelogrammführungen und/oder die trapezförmigen Führungen derart zueinander angeordnet sind, dass die Röntgenoptik im Wesentlichen zentral, zwischen den jeweiligen beiden Verbindungselementen der Verbindungselementenpaare durch das Aufnahmelement aufnehmbar ist.

Durch die zentrale Anordnung der Röntgenoptik zwischen den Verbindungselementen der Verbindungselementenpaare wird eine kompakte Anordnung erzielt. Zu diesem Zweck können der Parallelverschiebemechanismus (insbesondere die Parallelogrammführungen) und der Goniometermechanismus (insbesondere die wenigstens eine trapezförmige Führung) eine sie durchdringende Öffnung aufweisen. Innerhalb der Öffnung kann die Linse angeordnet werden.

Der Parallelverschiebemechanismus und der Goniometermechanismus sind koaxial ineinander angeordnet. Insbesondere ist der Goniometermechanismus koaxial im Parallelverschiebemechanismus angeordnet.

Die Mechanismen und somit die Führungen können insbesondere im Wesentlichen hohlzylinderförmig ausgebildet sein. Ferner kann wenigstens eine der Führungen eine Öffnung aufweisen, in welcher wenigstens eine der anderen Führungen angeordnet ist,

Ferner bevorzugt ist vorgesehen, dass der Parallelverschiebemechanismus und der Goniometermechanismus im Wesentlichen hohlzylinderförmig ausgebildet und koaxial zueinander angeordnet sind, wobei insbesondere der Goniometermechanismus koaxial im Parallelverschiebemechanismus angeordnet ist.

Insbesondere ist vorgesehen, dass die Kinematiken koaxial um die Achse der Röntgenoptik angeordnet sind.

Durch diese Ausgestaltung ist eine optimale Bauraumausnutzung gegeben.

Gemäß einer bevorzugten Ausgestaltung der Erfindung ist vorgesehen, dass der Parallelverschiebemechanismus einstückig ausgebildet ist und/oder der Goniometermechanismus einstückig ausgebildet ist.

Die einstückigen Ausführungen können z. B. durch Drehen, Fräsen, Bohren und Drahterodieren hergestellt werden. Dies erlaubt eine kostengünstige Fertigung, wodurch ein Kostenvorteil der Vorrichtung gegenüber herkömmlichen Verstelleinheiten erzielt werden kann.

Zur Verdeutlichung der Größenordnungen der Vorrichtung werden folgend noch einige bevorzugte Maße dargelegt:
So weist die Vorrichtung eine Höhe von vorzugsweise 30 mm bis 150 mm, insbesondere 40 mm bis 70 mm in der z-Richtung und/oder einen Durchmesser von vorzugsweise 20 mm bis 100, insbesondere 30 mm bis 50 mm im Wesentlichen rechtwinkelig zu der z-Richtung auf.

Die Festkörpergelenke weisen in z-Richtung eine Höhe und/oder in einer Richtung im Wesentlichen rechtwinkelig zu der z-Richtung eine Breite von vorzugsweise 1 mm bis 15 mm, insbesondere 2 mm bis 8 mm auf. Die Festkörpergelenke weisen in der jeweiligen Biegerichtung, also in einer Erstreckung im Wesentlichen rechtwinkelig zu ihrer Höhe und ihrer Breite eine Dicke von 0,1 mm bis 1 mm, insbesondere von 0,2 mm bis 0,6 auf.

Ferner wird eine Apparatur zur Verfügung gestellt. Die Apparatur umfasst die Vorrichtung nach einem der vorhergehenden Ansprüche und eine Röntgenoptik, welche in dem Aufnahmeelement aufgenommen und fixiert ist, derart, dass die Röntgenoptik in einer Ausgangsposition in z-Richtung ausgerichtet ist und sich der optische Eingangspunkt auf wenigstens einer, durch die Vorrichtung konstruktiv vorbestimmten Schwenkachse befindet.

Dadurch wird eine Einheit aus der Vorrichtung und der Röntgenoptik zur Verfügung gestellt.

Die Erfindung wird nachfolgend in Ausführungsbeispielen anhand der zugehörigen Zeichnungen erläutert. Es zeigen:
- Figur 1: eine Schnittdarstellung einer Apparatur,
- Figur 2: eine Detailansicht der Schnittdarstellung der Apparatur,
- Figur 3: eine Vorderansicht eines Parallelverschiebemechanismus,
- Figur 4: eine Seitenansicht des Parallelverschiebemechanismus,
- Figur 5: eine erste isometrische Ansicht des Parallelverschiebemechanismus,
- Figur 6: eine zweite isometrische Ansicht des Parallelverschiebemechanismus,
- Figur 7: eine Vorderansicht eines Goniometermechanismus,
- Figur 8: eine Seitenansicht des Goniometermechanismus,
- Figur 9: eine erste isometrische Ansicht des Goniometermechanismus,
- Figur 10: eine zweite isometrische Ansicht des Goniometermechanismus,

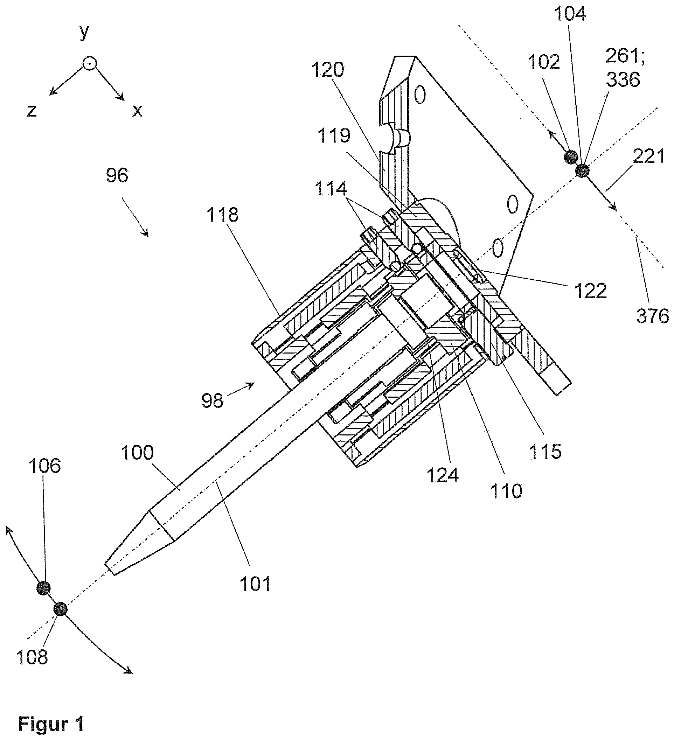

Figur 1 zeigt eine Schnittdarstellung einer Apparatur 96 gemäß einer bevorzugten Ausgestaltung der Erfindung mit Blickrichtung entgegen der y-Achse in die negative y-Richtung. Ein Kreis mit einem mittigen Kreuz symbolisiert einen Pfeil mit Blick in Pfeilrichtung, wohingegen ein Kreis mit einem mittigen Punkt einen Blick entgegen der Pfeilrichtung symbolisiert. Die Apparatur 96 umfasst die Vorrichtung 98 zur räumlichen Ausrichtung einer Röntgenoptik 100, z. B. einer Kapillar-Linse 100 (also eine Polykapillar-Linse), welche in einem Gehäuse mit einem ersten Gehäuseteil 118, einem zweiten Gehäuseteil 119 und einer Halterung 120 (zur Fixierung der Apparatur 96) angeordnet ist. Ferner umfasst die Apparatur 96 eine Kapillar-Linse 100, welche in einem Linsengehäuse und nicht geschnitten dargestellt ist.

Die Vorrichtung 98 und die Linse 100 werden typischerweise in einem Raum mit reduziertem Druck (teilweises Vakuum) betrieben. Eine Abdichtung des Vakuums erfolgt typischerweise entlang einer äußeren Mantelfläche des ersten Gehäuseteils 118. Die Halterung 120 ist dabei außerhalb des Vakuums angeordnet. Die der Vorrichtung zugewandte Seite des zweiten Gehäuseteils 119 ist auf Seiten des Vakuums, die andere Seite außerhalb des Vakuums. Dadurch sind Einstellelemente 114 (z. B. ein Feingewindetrieb) zur Betätigung der Vorrichtung 98 auch von außerhalb des Vakuums betätigbar. Eine Gegenkraft zu einer Einstellkraft der Einstellelemente 114 kann mittels Federelementen 115 aufgebracht werden. Die Einstellelemente 114 und Federelemente 115 können mittels Fett in das zweite Gehäuseteil 119 eingedichtet werden.

Mittels der ersichtlichen Einstellelemente 114 kann die Vorrichtung 98 derart betätigt werden, dass eine Parallelverschiebung in einer ersten Parallelverschieberichtung 221 und ein wenigstens näherungsweises Verschwenken der Linse 100 um eine erste Schwenkachse 336 (projiziert als Punkt dargestellt) durchgeführt werden können. Mittels zweier weiterer, nicht ersichtlicher Einstellelemente kann die Vorrichtung 98 derart betätigt werden, dass eine Parallelverschiebung in einer zweiten Parallelverschieberichtung 261 (projiziert als Punkt dargestellt) und ein wenigstens näherungsweises Verschwenken der Linse 100 um eine zweite Schwenkachse 376 durchgeführt werden können.

Im gezeigten Beispiel verlaufen sowohl die beiden Parallelverschieberichtung 221, 261, als auch die beiden Schwenkachsen 336, 376 in xy-Richtungen, also innerhalb einer xy-Ebene.

Im Speziellen können sich, wie gezeigt, die erste Parallelverschieberichtung 221 sowie die zweite Schwenkachse 376 in x-Richtung und die zweite Parallelverschieberichtung 261 sowie die erste Schwenkachse 336 in y-Richtung erstrecken. Die beiden Parallelverschieberichtungen 221, 261, wie auch die beiden Schwenkachsen 336, 376 können somit einen rechten Winkel zueinander bilden.

Die Linse 100 ist in der gezeigten Ausgangsposition mittels eines Aufnahmeelements 110 in z-Richtung ausgerichtet und weist einen optischen Eingangspunkt 104 und einen optischen Ausgangspunkt 108 auf, welche in z-Richtung voneinander beabstandet sind. Da es sich bei der dargestellten Röntgenoptik 100 um eine Kapillar-Linse 100 handelt, ist der optische Eingangspunkt 104 ein Eingangsfokus 104 und der optische Ausgangspunkt 108 ein Ausgangsfokus 108. Somit ist eine Achse 101 der Röntgenoptik 100, im gezeigten Fall eine Linsenachse 101 der Linse in z-Richtung ausgerichtet und die Linse 100 in z-Richtung für Röntgenstrahlen durchlässig. Zudem ist der Eingangsfokus 104 der Linse 100 mittels des Aufnahmeelements 110 in dem Schnittpunkt der beiden Schwenkachsen 336, 376 positioniert. Ein Fenster 122 im zweiten Gehäuseteil 119 gewährleistet eine möglichst unbeeinflusste Transmission der Röntgenstrahlen und eine Abdichtung des Vakuums.

Vor der Justage des Eingangsfokus 104 auf einen ersten vorbestimmten Punkt 102 (z. B. einen Brennfleck einer Anode) wird zunächst überprüft, ob eine Abweichungen vom Eingangsfokus 104 zum ersten vorbestimmten Punkt 102 in z-Richtung vorliegt. Geringe Abweichungen können gegebenenfalls vor der restlichen Justage mittels unterschiedlich dicker Distanzscheiben (nicht dargestellt) an der Position 124 zwischen dem Aufnahmeelement 110 und der Linse 100 ausgeglichen werden.

Zur Justage wird zunächst der Eingangsfokus 104 in den Parallelverschiebungen 221, 261 auf den ersten vorbestimmten Punkt 102 justiert, also mit dem ersten vorbestimmten Punkt 102 in Deckung gebracht. Dabei werden die Schwenkachsen 336, 376 mit dem Eingangsfokus 104 mitverschoben, sodass auch der Schnittpunkt der Schwenkachsen 336, 376 mit dem ersten vorbestimmten Punkt übereinstimmt. Somit ist gewährleistet, dass bei einer folgenden Verschwenkung der Linse 100 um die Schwenkachsen 336, 376 der Eingangsfokus 104 auf den ersten vorbestimmten Punkt 102 justiert bleibt.

Zur Justage des Ausgangsfokus 108 auf einen zweiten vorbestimmten Punkt 106 (z. B. ein Zielpunkt auf einer Probenoberfläche) wird die Linse 100 näherungsweise um die Schwenkachsen 336, 376, und somit den Eingangsfokus 104 verschwenkt. Der Eingangsfokus 104 bleibt bei dieser Goniometerverstellung im Wesentlichen ortsfest.

Als Ergebnis der Justage ist der Eingangsfokus auf den ersten vorbestimmten Punkt 104 und der Ausgangsfokus 108 auf den zweiten vorbestimmen Punkt 106 justiert. Durch die Verschwenkung der Linse 100 bedingte Abstandänderungen in z-Richtung zwischen den beiden Fokussen 104, 108 können für gewöhnlich vernachlässigt werden.

Die gezeigten Abstände zwischen der Apparatur 96 und den Schwenkachsen 336, 376, den beiden Fokussen 104, 108, sowie den beiden vorbestimmten Punkten 102, 106 sind in den Figuren nicht maßstabsgetreu dargestellt.

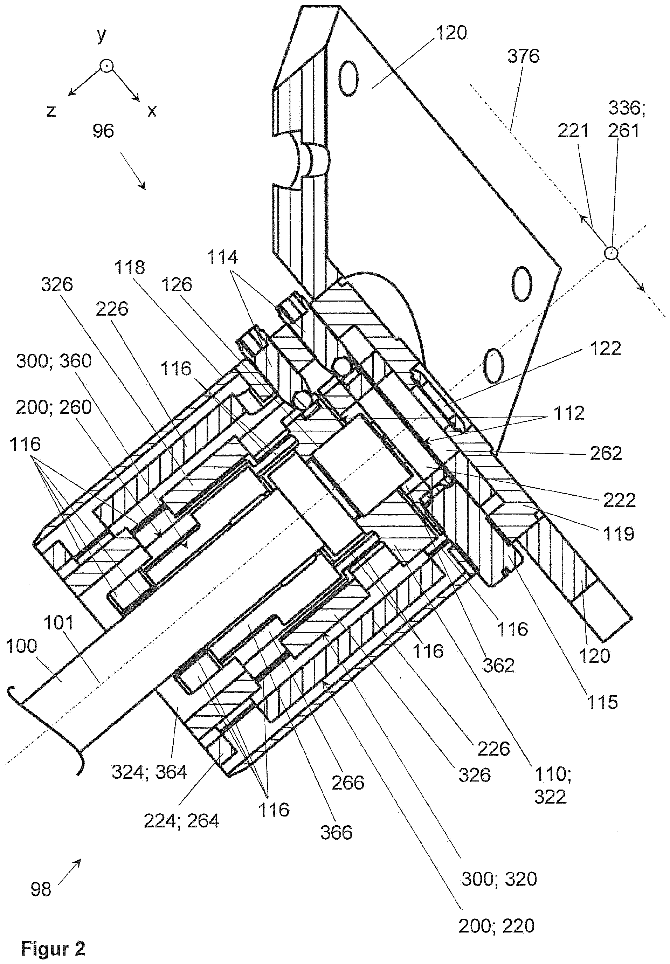

Figur 2 zeigt eine Detailansicht der aus Figur 1 bekannten Schnittdarstellung der Apparatur 96. Die Vorrichtung 98 zur räumlichen Ausrichtung einer Röntgenoptik 100 umfasst einen Parallelverschiebemechanismus 200 und einen Goniometermechanismus 300.

Der Parallelverschiebemechanismus 200 umfasst eine erste Parallelkinematik 220 zur Parallelverschiebung der Linse 100 in der ersten Parallelverschieberichtung 221 und eine zweite Parallelkinematik 260 zur Parallelverschiebung der Linse 100 in der zweiten Parallelverschieberichtung 261. Die beiden Kinematiken können wie dargestellt als eine erste Parallelogrammführung 220 und als eine zweite Parallelogrammführung 260 ausgeführt sein.

Der Goniometermechanismus 300 umfasst eine erste Goniometerkinematik 320 zur wenigstens näherungsweisen Verschwenkung der Linse 100 um die erste Schwenkachse 336 und eine zweite Goniometerkinematik 360 zur wenigstens näherungsweisen Verschwenkung der Linse um die zweite Schwenkachse 376. Diese beiden Kinematiken 320, 360 können wie dargestellt als eine erste symmetrische, trapezförmige Führung 320 und als eine zweite symmetrische, trapezförmige Führung 360 ausgeführt sein. Die Bezeichnung "symmetrische, trapezförmige Führung" bezeichnet die Form dieser Führungen in der dargestellten Ausgangsposition.

Der Goniometermechanismus kann wie in Figur 2 ersichtlich, insbesondere in der Ausgangsposition koaxial zwischen dem Parallelverschiebemechanismus 200 und der Linsenachse 101 angeordnet sein.

Die Kinematiken 220, 260, 320, 360 umfassen jeweils ein erstes Gegenelement 222, 262, 322, 362, welches zwischen den Schwenkachsen 336, 376 und einem zweiten Gegenelement 224, 264, 324, 364 angeordnet ist.

Im Speziellen umfasst die erste Parallelogrammführung 220 ein erstes Gegenelement 222 und ein zweites Gegenelement 224, welche mittels zweier Verbindungselemente 226 miteinander verbunden sind. Die zweite Parallelogrammführung 260 umfasst ein erstes Gegenelement 262 und ein zweites Gegenelement 264, welche mittels zweier Verbindungselemente 266 miteinander verbunden sind. Von den zwei Verbindungselementen 266 ist nur eines ersichtlich, welches sich in Figur 2 hinter der Linse 100 erstreckt. Wie gezeigt, können die beiden zweiten Gegenelemente 224, 264 integral miteinander verbunden, also als ein gemeinsames Gegenelement ausgeführt sein. Das erste Gegenelement 262 dient zudem zur Fixierung der Vorrichtung im zweiten Gehäuseteil 119. Dies kann beispielsweise mittels Schraubverbindungen (nicht dargestellt) erfolgen. Zwischen den beiden ersten Gegenelementen 222, 262 befindet sich ein Spalt 112, damit eine Relativbewegung der ersten Gegenelemente 222, 262 zueinander möglich ist.

Die erste trapezförmige Führung 320 umfasst ein erstes Gegenelement 322 und ein zweites Gegenelement 324, welche mittels zweier Verbindungselemente 326 miteinander verbunden sind. Die zweite trapezförmige Führung 360 umfasst ein erstes Gegenelement 362 und ein zweites Gegenelement 364, welche mittels zweier Verbindungselemente 366 miteinander verbunden sind. Von den zwei Verbindungselementen 366 ist nur eines ersichtlich, welches sich in Figur 2 hinter der Linse 100 und vor dem Verbindungselement 266 erstreckt. Wie gezeigt, können die beiden zweiten Gegenelemente 324, 364 integral miteinander verbunden, also als ein gemeinsames Gegenelement ausgeführt sein. Das erste Gegenelement 322 ist mit dem Aufnahmeelement 110 einstückig ausgeführt und dient somit zur Aufnahme und Fixierung der Linse 100. Die Linse 100 ist im Beispiel mittels einer Schraubverbindung 126 in das Aufnahmeelement 110 eingeschraubt. Zwischen den beiden ersten Gegenelementen 322, 362 befindet sich ein Spalt 112, damit eine Relativbewegung der ersten Gegenelemente 322, 362 zueinander möglich ist.

Die Parallelverschiebemechanik 200 ist mit der Goniometermechanik 300 über das erste Gegenelement 222 und das erste Gegenelement 362 verbunden, sodass keine Relativbewegungen zueinander möglich sind. Im Beispiel sind diese miteinander verschraubt.

Entsprechend der vorliegenden Nomenklatur ist das jeweilige erste Gegenelement 222, 262, 322, 362 somit zwischen den Schwenkachsen 336, 376 und dem jeweiligen zweiten Gegenelement 224, 264, 324, 364 angeordnet. Mit anderen Worten ist das jeweilige zweite Gegenelement 224, 264, 324, 364 zum jeweiligen ersten Gegenelement 222, 262, 322, 362 in positiver z-Richtung beabstandet.

Die Verbindungen von den Verbindungselementen 226, 266, 326, 366 zu den Gegenelementen 222, 262, 322, 362, 224, 264, 324, 364 erfolgen besonders vorteilhaft mittels Festkörpergelenken 116. Auf diese Verbindungen wird in den Beschreibungen der folgenden Figuren näher eingegangen.

Durch die Verwendung von Festkörpergelenken 116 kann sowohl der Parallelverschiebemechanismus 200 als auch der Goniometermechanismus 300 einstückig ausgeführt werden.

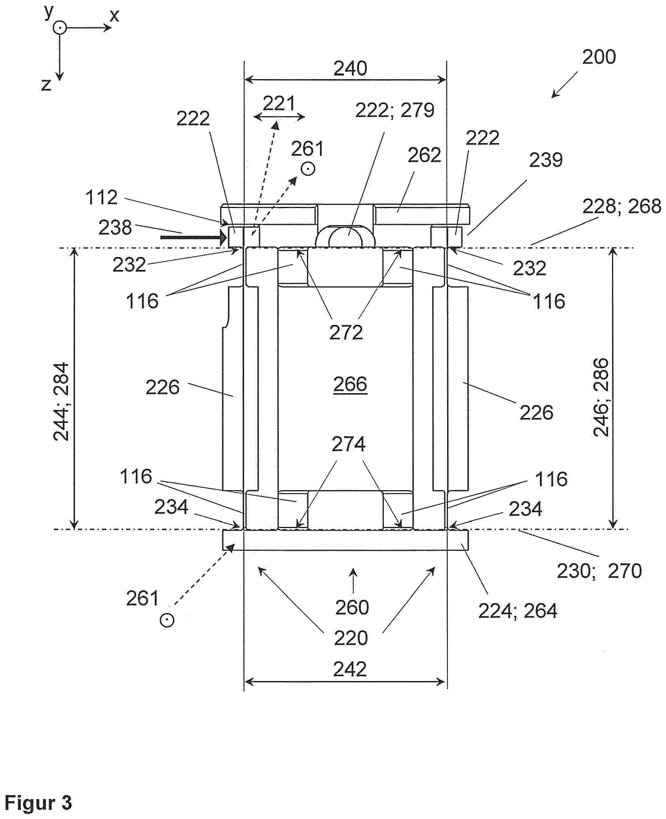

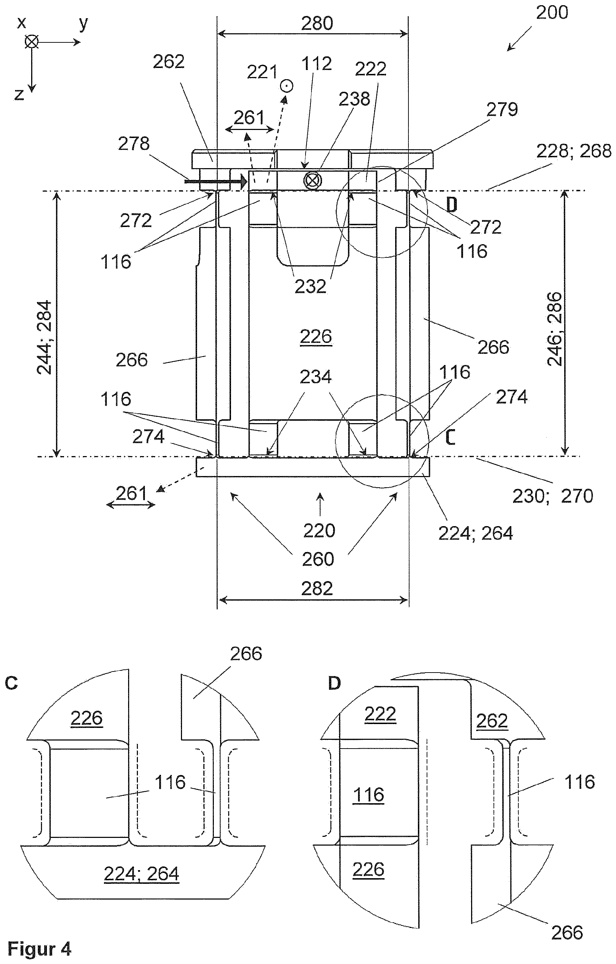

Figur 3 zeigt eine Vorderansicht des Parallelverschiebemechanismus 200, wiederum mit Blickrichtung entgegen der y-Achse in die negative y-Richtung. In dieser Ansicht wird das erste Gegenelement 222 der ersten Parallelogrammführung 220 teilweise durch das erste Gegenelement 262 der zweiten Parallelogrammführung 260 verdeckt, sodass der Spalt 112 (siehe insbesondere Figur 4) zwischen den ersten Gegenelementen 222, 262 nur teilweise ersichtlich ist. Figur 4 zeigt eine Seitenansicht des Parallelverschiebemechanismus 200 mit Blickrichtung in Richtung der x-Achse, also in die positive x-Richtung.

Die Festkörpergelenke 116 verbinden die Verbindungselemente 226, 266 mit den Gegenelementen 222, 262, 224, 264, wobei die Verbindung über wenigstens ein erstes Ende 232, 272 (im gezeigten Beispiel über jeweils zwei Enden 232, 272) und wenigstens ein zweites Ende 234, 274 (im gezeigten Beispiel über jeweils zwei Enden 234, 274) der Verbindungselemente 226, 266 erfolgt. Die Festkörpergelenke 116 sind bezüglich ihrer Biegesteifigkeiten bzw. Nachgiebigkeiten derart dimensioniert, dass ein Kraftaufwand zur Verbiegung in der jeweiligen Parallelverschieberichtung 221, 261 verglichen mit anderen Raumrichtungen wesentlich geringer ist.

In der ersten Parallelogrammführung 220 sind die Verbindungselemente 226 in einer ersten Verbindungsebene 228, welche entlang der ersten Parallelverschieberichtung 221 verläuft, jeweils über zwei erste Enden 232 mit dem ersten Gegenelement 222 verbunden. Im gezeigten Beispiel ist die erste Verbindungsebene 228 eine xy-Ebene. In einer, zur ersten Verbindungsebene 228 parallel beabstandeten, zweiten Verbindungsebene 230 sind die Verbindungselemente 226 über jeweils zwei zweite Enden 234 mit dem zweiten Gegenelement 224 verbunden. Das zweite Gegenelement 224 und die zweite Verbindungsebene 230 sind zum ersten Gegenelement 222 und zur ersten Verbindungsebene 228 in positiver z-Richtung versetzt.

In der ersten Parallelverschieberichtung 221 weisen die zwei ersten Enden 232 eines der Verbindungselemente 226 zu den zwei ersten Enden 232 des anderen Verbindungselements 226 einen ersten Abstand 240 auf. In dieser Richtung weisen auch die zwei zweiten Enden 234 eines der Verbindungselemente 226 zu den zwei zweiten Enden 234 des anderen Verbindungselements 226 einen zweiten Abstand 242 auf. Der erste Abstand 240 ist gleich dem zweiten Abstand 242, um eine Parallelogrammführung zu erzielen.

Daraus resultiert auch, dass in einer Ebene, welche in Richtung der ersten Parallelverschieberichtung 221 und rechtwinklig zu den beiden Verbindungsebenen 229, 230 verläuft, die jeweiligen Abstände 244, 246 zwischen den jeweiligen ersten Enden 232 und den jeweiligen zweiten Enden 234 der Verbindungselemente 226 gleich sind. Die zwei ersten Enden 232 und die zwei zweiten Enden 234 des jeweiligen Verbindungselements 226 sind in einer Richtung parallel zu den Verbindungsebenen 228, 230 und rechtwinklig zu der ersten Parallelverschieberichtung 221, im Beispiel also in y-Richtung zueinander versetzt.

Um eine Parallelverschiebung der Linse 100 in der ersten Parallelverschieberichtung 221 durchzuführen, wird mittels eines Einstellelements 114 eine erste Einstellkraft 238 in das erste Gegenelement 222 eingeleitet, wobei die erste Einstellkraft 238 eine Komponente in der ersten Parallelverschieberichtung 221 aufweist. Die dargestellte, erste Einstellkraft 238 weist im Ausführungsbeispiel eine (alleinige) Komponente in die positive x-Richtung auf. Durch die erste Einstellkraft 238 wird somit eine Biegung der Festkörpergelenke 116 und damit einhergehend eine Parallelverschiebung des ersten Gegenelements 222 relativ zum zweiten Gegenelement 224 erzielt.

Die Parallelverschiebung findet ein Ende, wenn ein Kräftegleichgewicht eingetreten ist. Dies ergibt sich auf der einen Seite aus der ersten Einstellkraft 238, welche in die positive x-Richtung wirk und auf der anderen Seite aus Kräften resultierend aus der Biegung der Festkörpergelenke 116, sowie eine Federkraft (nicht dargestellt), welche von einem Federelement 115 aufgebracht wird und an einem ersten Gegenlager 239 in die negative x-Richtung wirkt. Durch eine Vorspannung des Federelements 115 kann auch eine Parallelverschiebung in die negative x-Richtung durchgeführt werden.

In der zweiten Parallelogrammführung 260 sind die Verbindungselemente 266 in einer ersten Verbindungsebene 268, welche entlang der zweiten Parallelverschieberichtung 261 verläuft, jeweils über zwei erste Enden 272 mit dem ersten Gegenelement 262 verbunden. Im gezeigten Beispiel ist die erste Verbindungsebene 268 eine xy-Ebene. In einer, zur ersten Verbindungsebene 268 parallel beabstandeten, zweiten Verbindungsebene 270 sind die Verbindungselemente 266 über zwei zweite Enden 274 mit dem zweiten Gegenelement 264 verbunden. Das zweite Gegenelement 264 und die zweite Verbindungsebene 270 sind zum ersten Gegenelement 262 und zur ersten Verbindungsebene 268 in positiver z-Richtung versetzt. In der zweiten Parallelverschieberichtung 261 weisen die zwei ersten Enden 272 eines der Verbindungselemente 266 zu den zwei ersten Enden 272 des anderen Verbindungselements 266 einen ersten Abstand 280 auf. In dieser Richtung weisen auch die zwei zweiten Enden 274 eines der Verbindungselemente 266 zu den zwei zweiten Enden 274 des anderen Verbindungselements 266 einen zweiten Abstand 282 auf. Der erste Abstand 280 ist gleich dem zweiten Abstand 282, um eine Parallelogrammführung zu erzielen. Daraus resultiert auch, dass in einer Ebene in Richtung der zweiten Parallelverschieberichtung 261 und rechtwinklig zu den beiden Verbindungsebenen 269, 270 die jeweiligen Abstände 284, 286 zwischen den jeweiligen ersten Enden 272 und den jeweiligen zweiten Enden 274 der Verbindungselemente 266 gleich sind. Die zwei ersten Enden 272 und die zwei zweiten Enden 274 des jeweiligen Verbindungselements 266 sind in einer Richtung parallel zu den Verbindungsebenen 268, 270 und rechtwinklig zu der zweiten Parallelverschieberichtung 261, im Beispiel also in x-Richtung zueinander versetzt.

Im Ausführungsbeispiel sind die ersten Verbindungsebenen 228 und 268, sowie die zweiten Verbindungsebenen 230, 270 der Parallelogrammführungen 220, 260 identisch.

Um eine Parallelverschiebung der Linse 100 in der zweiten Parallelverschieberichtung 261 durchzuführen, wird mittels eines Einstellelements 114 eine zweite Einstellkraft 278 in das erste Gegenelement 222 der ersten Parallelogrammführung 220 eingeleitet, wobei die zweite Einstellkraft 278 eine Komponente in der zweiten Parallelverschieberichtung 261 aufweist. Die dargestellte, zweite Einstellkraft 278 weist im Ausführungsbeispiel eine (alleinige) Komponente in die positive y-Richtung auf. Die zweite Einstellkraft 278 wird über die, in der zweiten Parallelverschieberichtung 261 biegesteifen Festkörpergelenke 116 der ersten Parallelogrammführung 220 an das gemeinsame zweite Gegenelement 224, 264 der ersten und der zweiten Parallelogrammführung 220, 260 geleitet. Durch die zweite Einstellkraft 278 wird somit eine Biegung der Festkörpergelenke 116 der zweiten Parallelogrammführung 260 und damit einhergehend eine Parallelverschiebung des zweiten Gegenelements 264 relativ zum zweiten Gegenelement 264 in der zweiten Parallelverschieberichtung 261 erzielt.

Die Parallelverschiebung findet ein Ende, wenn ein Kräftegleichgewicht in der zweiten Parallelverschieberichtung 261 eingetreten ist. Dies ergibt sich auf der einen Seite aus der zweiten Einstellkraft 278, welche in die positive y-Richtung wirkt und auf der anderen Seite aus Kräften resultierend aus der Biegung der Festkörpergelenke 116, sowie einer Federkraft (nicht dargestellt), welche von einem Federelement 115 aufgebracht wird und an einem ersten Gegenlager 279 in die negative y-Richtung wirkt. Durch eine Vorspannung des Federelements 115 kann auch eine Parallelverschiebung in die negative y-Richtung durchgeführt werden.

In den Details C und D sind die Festkörpergelenke 116 im Detail dargestellt. Diese weisen gegebenenfalls abgerundete Übergänge zu den Gegenelementen 222, 224, 262, 264 und den Verbindungselementen 226, 266 auf - symbolisch als gestrichelte Linien angedeutet.

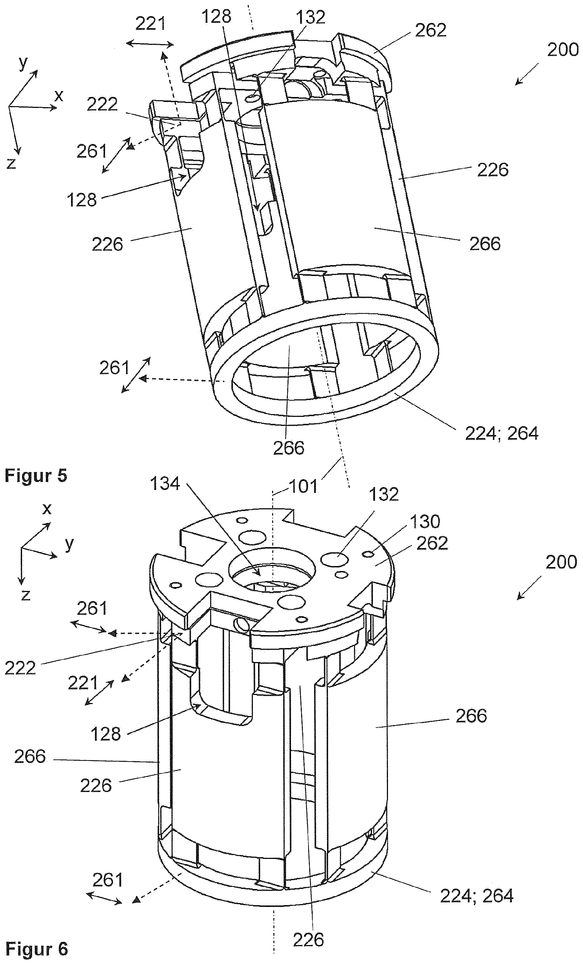

Figuren 5 und 6 zeigen isometrische Ansichten des Parallelverschiebemechanismus 200. Gut ersichtlich ist der koaxiale Aufbau des Parallelverschiebemechanismus 200 um die Linsenachse 101. Zudem ist eine Öffnung 134 ersichtlich, welche den Parallelverschiebemechanismus 200 und die gesamte Vorrichtung 98 durchdringt. Die Öffnung 134 dient zur Aufnahme des Goniometermechanismus 300. Zudem sind Gewindelöcher 130 in dem ersten Gegenelement 262 (Figur 6) ersichtlich, welche zur Fixierung des Parallelverschiebemechanismus 200 und somit der Vorrichtung 98 in dem zweiten Gehäuseteil 119 dienen. Die Durchgangslöcher 132 in dem ersten Gegenelement 222 (Figur 5) dienen zur Verbindung des Parallelverschiebemechanismus 200 mit dem Goniometermechanismus 300. Mittels der Durchgangslöcher 132 in dem ersten Gegenelement 262 (Figur 6) sind Schrauben durch das erste Gegenelement 262 durchführbar und deren Schraubenköpfe in das erste Gegenelement 222 einsetzbar. Der Parallelverschiebemechanismus 200 ist, wie auch der folgend erörterte Goniometermechanismus 300 einstückig ausgeführt.

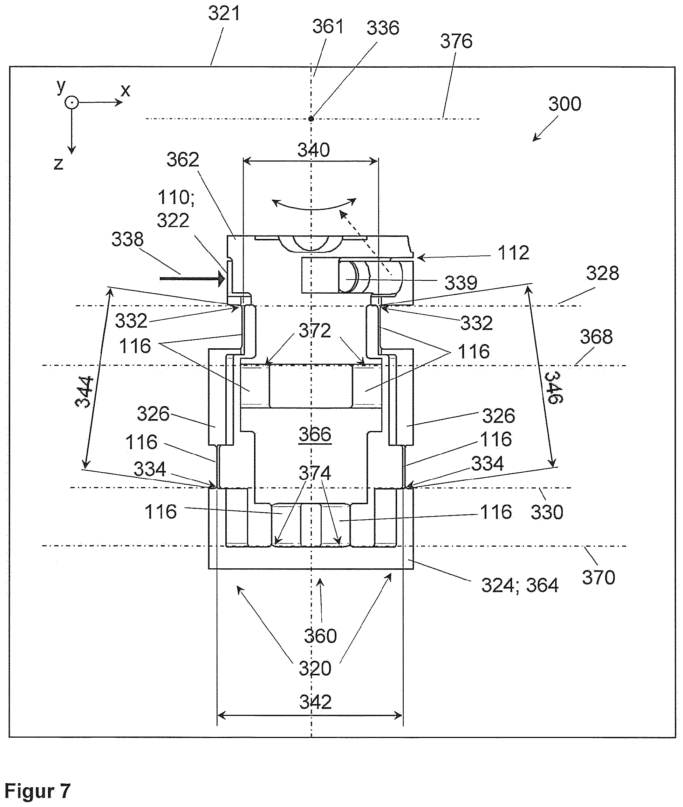

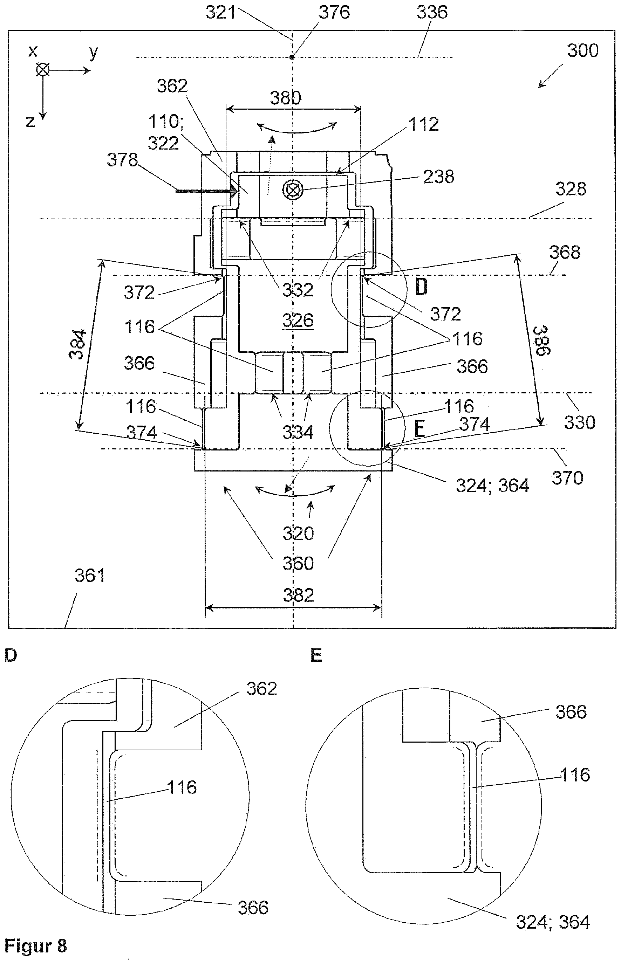

Figur 7 zeigt eine Vorderansicht des Goniometermechanismus 300, mit Blickrichtung entgegen der y-Achse in die negative y-Richtung. In dieser Ansicht wird das erste Gegenelement 322 der ersten symmetrischen, trapezförmigen Führung 320 teilweise durch das erste Gegenelement 362 der zweiten symmetrischen, trapezförmigen Führung 360 verdeckt, so dass der Spalt 112 (siehe insbesondere Figur 8) zwischen den ersten Gegenelementen 322, 362 nur teilweise ersichtlich ist. Figur 8 zeigt eine Seitenansicht des Goniometermechanismus 300 mit Blickrichtung in Richtung der x-Achse, also in die positive x-Richtung.

Die Festkörpergelenke 116 verbinden die Verbindungselemente 326, 366 mit den Gegenelementen 322, 362, 324, 364, wobei die Verbindung über wenigstens ein erstes Ende 332, 372 (im gezeigten Beispiel über jeweils zwei Enden 332, 372) und wenigstens ein zweites Ende 334, 374 (im gezeigten Beispiel über jeweils zwei Enden 334, 374) der Verbindungselemente 326, 366 erfolgt. Die Festkörpergelenke 116 sind bezüglich ihrer Biegesteifigkeiten bzw. Nachgiebigkeiten derart dimensioniert, dass ein Kraftaufwand zur Verbiegung um die erste Schwenkachse 336 (also eine Verbiegung in x-Richtung) oder um die zweite Schenkachse 376 (also eine Verbiegung in y-Richtung) verglichen mit anderen Raumrichtungen wesentlich geringer ist.

In der ersten trapezförmigen Führung 320 sind die Verbindungselemente 326 in einer ersten Verbindungsebene 328, welche parallel zu der ersten Schwenkachse 336 verläuft, jeweils über zwei erste Enden 332 mit dem ersten Gegenelement 322 verbunden. In einer, ebenfalls zur ersten Schwenkachse 336 parallel verlaufenden und zur ersten Verbindungsebene 328 beabstandeten, zweiten Verbindungsebene 330 sind die Verbindungselemente 326 über jeweils zwei zweite Enden 334 mit dem zweiten Gegenelement 324 verbunden. Im gezeigten Beispiel ist die zweite Verbindungsebene 330 eine xy-Ebene. Zudem ist in der gezeigten Ausgangsposition die erste Verbindungsebene 328 zur zweiten Verbindungsebene 330 parallel. Das zweite Gegenelement 324 und die zweite Verbindungsebene 330 sind zum ersten Gegenelement 322 und zur ersten Verbindungsebene 328 in positiver z-Richtung versetzt.

In einer Richtung verlaufend entlang der ersten Verbindungsebene 328 und rechtwinklig zu der ersten Schwenkachse 336 (im Beispiel in x-Richtung) weisen die zwei ersten Enden 332 eines der Verbindungselemente 326 zu den zwei ersten Enden 332 des anderen Verbindungselements 326 einen ersten Abstand 340 auf. In einer Richtung verlaufend entlang der zweiten Verbindungsebene 330 und rechtwinklig zu der ersten Schwenkachse 336 (im Beispiel in x-Richtung) weisen auch die zwei zweiten Enden 334 eines der Verbindungselemente 326 zu den zwei zweiten Enden 334 des anderen Verbindungselements 326 einen zweiten Abstand 342 auf. Der erste Abstand 340 ist kleiner als der zweite Abstand 342.

In Richtungen entlang des Verlaufs einer Ebene 321, welche rechtwinklig zu der ersten Schwenkachse 336 verläuft, sind die jeweiligen Abstände 344, 346 zwischen den jeweiligen ersten Enden 332 und den jeweiligen zweiten Enden 334 der Verbindungselemente 326 gleich. Die zwei ersten Enden 332 und die zwei zweiten Enden 334 des jeweiligen Verbindungselements 326 sind in Richtung der ersten Schwenkachse 336, im Beispiel also in y-Richtung zueinander versetzt.

Um eine Goniometerbewegung der Linse 100 um die erste Schwenkachse 336 durchzuführen, wird mittels eines Einstellelements 114 eine dritte Einstellkraft 338 in das erste Gegenelement 322 eingeleitet, wobei die dritte Einstellkraft 338 eine Komponente rechtwinklig zu der ersten Schwenkachse 336 und parallel zu der der ersten Verbindungsebene 328 aufweist. Die dargestellte, dritte Einstellkraft 338 weist im Ausführungsbeispiel eine (alleinige) Komponente in die positive x-Richtung auf. Durch die dritte Einstellkraft 338 wird somit eine Biegung der Festkörpergelenke 116 und damit einhergehend eine Goniometerbewegung des ersten Gegenelements 322 erzielt, indem das erste Gegenelement 322 wenigstens näherungsweise um die erste Schwenkachse 336 schwenkt. Solange die zweite trapezförmige Führung 360 nicht betätigt wird, wird die Linse 100 also in der Ebene 321 wenigstens näherungsweise verschwenkt.

Die Goniometerbewegung findet ein Ende, wenn ein Kräftegleichgewicht eingetreten ist. Dies ergibt sich auf der einen Seite aus der dritte Einstellkraft 338, welche in die positive x-Richtung wirkt und auf der anderen Seite aus Kräften resultierend aus der Biegung der Festkörpergelenke 116, sowie eine Federkraft (nicht dargestellt), welche von einem Federelement 115 aufgebracht wird und an einem kombinierten Gegenlager 339 unter anderem in die negative x-Richtung wirkt. Das Federelement, welches an dem kombinierten Gegenlager 339 wirkt, bringt aufgrund der Schrägstellung innerhalb der xy-Ebene eine Federkraft auf das erste Gegenelement 322 auf, welche sowohl der dritten Einstellkraft 338, als auch der vierten Einstellkraft 378 (siehe Figur 8) entgegenwirkt. Durch eine Vorspannung des Federelements 115 kann auch eine Goniometerbewegung in der entgegengesetzten Schwenkrichtung um die erste Schwenkachse 336 durchgeführt werden.

In der zweiten trapezförmigen Führung 360 sind die Verbindungselemente 366 in einer ersten Verbindungsebene 368, welche parallel zu der zweiten Schwenkachse 376 verläuft, jeweils über zwei erste Enden 372 mit dem ersten Gegenelement 362 verbunden. Im gezeigten Beispiel ist die erste Verbindungsebene 368 eine xy-Ebene. In einer, ebenfalls zur zweiten Schwenkachse 376 parallel verlaufenden und zur ersten Verbindungsebene 368 beabstandeten, zweiten Verbindungsebene 370 sind die Verbindungselemente 366 über jeweils zwei zweite Enden 374 mit dem zweiten Gegenelement 364 verbunden. In der gezeigten Ausgangsposition ist die zweite Verbindungsebene 370 zur ersten Verbindungsebene 368 parallel. Das zweite Gegenelement 364 und die zweite Verbindungsebene 370 sind zum ersten Gegenelement 362 und zur ersten Verbindungsebene 368 in positiver z-Richtung versetzt.

In einer Richtung verlaufend entlang der ersten Verbindungsebene 368 und rechtwinklig zu der zweiten Schwenkachse 376 (im Beispiel in y-Richtung) weisen die zwei ersten Enden 372 eines der Verbindungselemente 366 zu den zwei ersten Enden 372 des anderen Verbindungselements 366 einen ersten Abstand 380 auf. In einer Richtung verlaufend entlang der zweiten Verbindungsebene 370 und rechtwinklig zu der zweiten Schwenkachse 376 (im Beispiel in y-Richtung) weisen die zwei zweiten Enden 374 eines der Verbindungselemente 366 zu den zwei zweiten Enden 374 des anderen Verbindungselements 366 einen zweiten Abstand 382 auf. Der erste Abstand 380 ist kleiner als der zweite Abstand 382.

In Richtungen entlang des Verlaufs einer Ebene 361, welche rechtwinklig zu der zweiten Schwenkachse 376 verläuft, sind die jeweiligen Abstände 384, 386 zwischen den jeweiligen ersten Enden 372 und den jeweiligen zweiten Enden 374 der Verbindungselemente 366 gleich. Die zwei ersten Enden 372 und die zwei zweiten Enden 374 des jeweiligen Verbindungselements 366 sind in Richtung der zweiten Schwenkachse 376, im Beispiel also in x-Richtung zueinander versetzt.

Um eine Goniometerbewegung der Linse 100 um die zweite Schwenkachse 376 durchzuführen, wird mittels eines Einstellelements 114 eine vierte Einstellkraft 378 in das erste Gegenelement 322 der ersten trapezförmigen Führung 320 eingeleitet, wobei die vierte Einstellkraft 378 eine Komponente rechtwinklig zu der zweiten Schwenkachse 376 und parallel zu der zweiten Verbindungsebenen 370 aufweist. Die dargestellte, vierte Einstellkraft 378 weist im Ausführungsbeispiel eine (alleinige) Komponente in die positive y-Richtung auf. Die vierte Einstellkraft 378 wird über die, in Richtung rechtwinklig zu der zweiten Schwenkachse 376 und parallel zu der zweiten Verbindungsebenen 370 biegesteifen Festkörpergelenke 116 der ersten trapezförmigen Führung 320 an das gemeinsame zweite Gegenelement 324, 364 der ersten und der zweiten trapezförmigen Führungen 320, 360 geleitet. Durch die vierte Einstellkraft 378 wird somit eine Biegung der Festkörpergelenke 116 der zweiten trapezförmigen Führung 360 und damit einhergehend eine Goniometerbewegung des zweiten Gegenelements 324, 364 und des ersten Gegenelements 322 wenigstens näherungsweise um die zweite Schwenkachse 376 erzielt. Solange die erste trapezförmige Führung 320 nicht betätigt wird, wird die Linse 100 also in der Ebene 361 wenigstens näherungsweise verschwenkt.

Die Goniometerbewegung findet ein Ende, wenn ein Kräftegleichgewicht eingetreten ist. Dies ergibt sich auf der einen Seite aus der vierten Einstellkraft 378, welche in die positive y-Richtung wirkt und auf der anderen Seite aus Kräften resultierend aus der Biegung der Festkörpergelenke 116, sowie eine Federkraft (nicht dargestellt), welche von einem Federelement 115 aufgebracht wird und an dem kombinierten Gegenlager 339 unter anderem in die negative y-Richtung wirkt. Das Federelement 115, welches an dem kombinierten Gegenlager 339 wirkt, bringt, wie bereits erörtert, aufgrund der Schrägstellung innerhalb der xy-Ebene eine Federkraft auf das erste Gegenelement 322 auf, welche sowohl der dritten Einstellkraft 338, als auch der vierten Einstellkraft 378 entgegenwirkt. Durch eine Vorspannung des Federelements 115 kann auch eine Goniometerbewegung in der entgegengesetzten Schwenkrichtung um die zweite Schwenkachse 376 durchgeführt werden.

Im Ausführungsbeispiel sind die ersten Verbindungsebenen 328 und 368, sowie die zweiten Verbindungsebenen 330, 370 der trapezförmigen Führungen 320, 360 in der gezeigten Ausgangsposition parallel zueinander.

In den Details D und E sind die Festkörpergelenke 116 im Detail dargestellt. Diese weisen gegebenenfalls abgerundete Übergänge zu den Gegenelementen 322, 324, 362, 364 und den Verbindungselementen 326, 366 auf - symbolisch als gestrichelte Linien angedeutet.

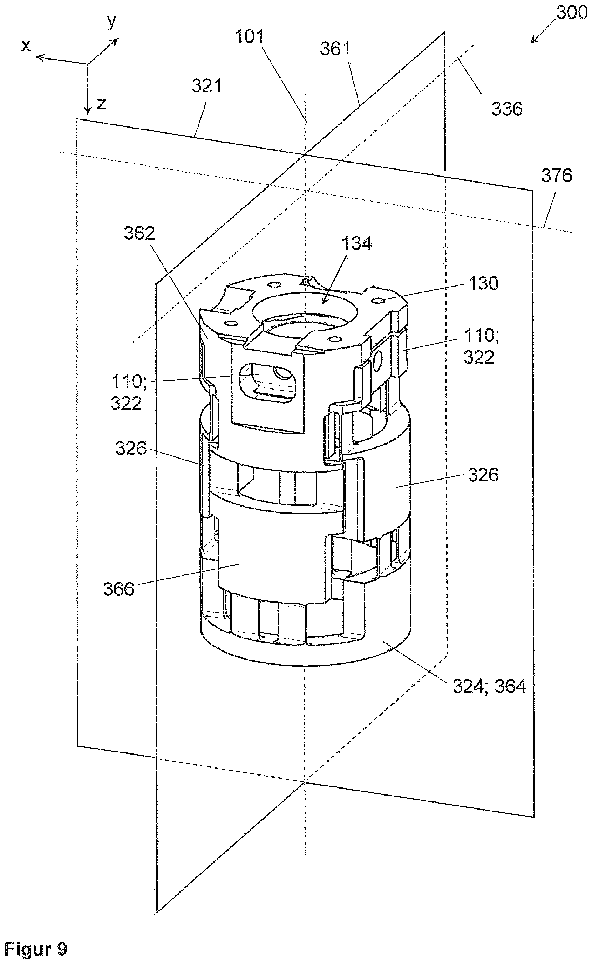

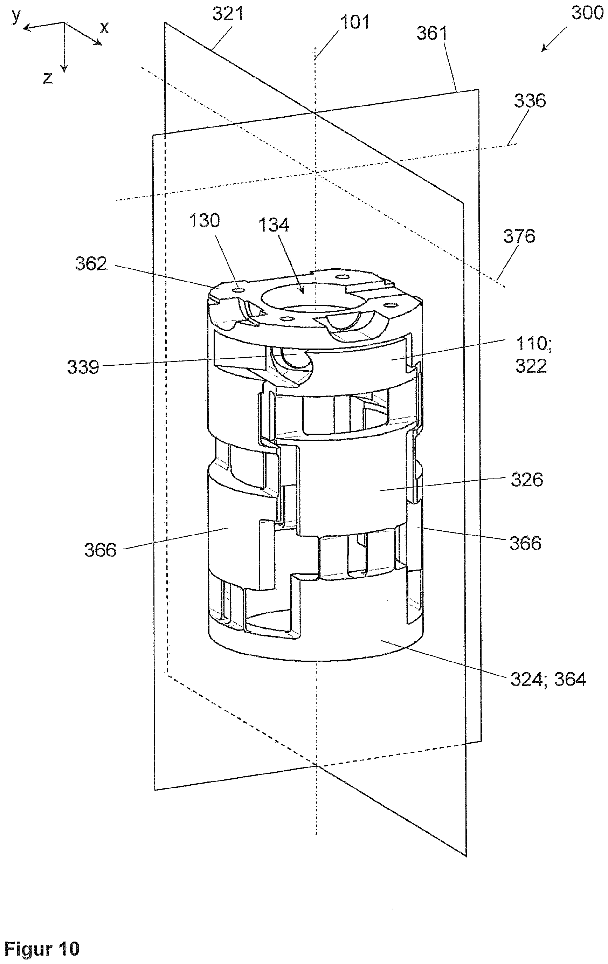

Figuren 9 und 10 zeigen isometrische Ansichten des Goniometermechanismus 300. Gut ersichtlich ist der koaxiale Aufbau des Goniometermechanismus 300 um die Linsenachse 101. Zudem ist eine Öffnung 134 ersichtlich, welche den Goniometermechanismus 300 und die gesamte Vorrichtung 98 durchdringt. Durch die Öffnung 134 können die Röntgenstrahlen durch Vorrichtung 98 hindurchtreten. Zudem sind Gewindelöcher 130 in dem ersten Gegenelement 362 ersichtlich, welche zur Verbindung des Goniometermechanismus 300 mit dem Parallelverschiebemechanismus 200 dienen.

Wie insbesondere in den Figuren 1, 2, 5, 6, 9 und 10 ersichtlich ist, sind der Parallelverschiebemechanismus 200 und der Goniometermechanismus 300 im Wesentlichen hohlzylinderförmig ausgebildet und koaxial zueinander angeordnet, wobei der Goniometermechanismus 300 koaxial im Parallelverschiebemechanismus 200 angeordnet ist.

Innerhalb der Apparatur 96 (vergleiche Figuren 1 und 2) sind somit:
- die Linse 100 mit dem Aufnahmeelement 110 verbunden (bzw. in das Aufnahmeelement 110 eingeschraubt) und das Aufnahmeelement 110 mit dem ersten Gegenelement 322 der ersten trapezförmigen Führung 320 einstückig ausgeführt;
- das erste Gegenelement 322 mittels den Verbindungselementen 326 der ersten trapezförmigen Führung 320 und deren Festkörpergelenken 116 mit dem einstückig ausgeführten, zweiten Gegenelement 324, 364 der ersten und zweiten trapezförmigen Führung 320, 360 verbunden;
- das zweite Gegenelement 324, 364 mittels den Verbindungselementen 366 der zweiten trapezförmigen Führung 360 und deren Festkörpergelenken 116 mit dem ersten Gegenelement 362 der zweiten trapezförmigen Führung 360 verbunden;
- das erste Gegenelement 362 der zweiten trapezförmigen Führung 360 mit dem ersten Gegenelement 222 der ersten Parallelführung 220 verbunden (bzw. verschraubt);
- das erste Gegenelement 222 mittels den Verbindungselementen 226 der ersten Parallelogrammführung 220 und deren Festkörpergelenken 116 mit dem einstückig ausgeführten, zweiten Gegenelement 224, 264 der ersten und zweiten Parallelogrammführung 220, 260 verbunden;
- das zweite Gegenelement 224, 264 mittels den Verbindungselementen 266 der zweiten trapezförmigen Führung 260 und deren Festkörpergelenken 116 mit dem ersten Gegenelement 262 der zweiten trapezförmigen Führung 360 verbunden; und
- das erste Gegenelement 262 der zweiten Parallelogrammführung 260 mit dem zweiten Gehäuseteil 119 der Apparatur 96 verbunden (bzw. verschraubt).

Somit wird durch die Vorrichtung 98 eine Vorrichtung zur 2-Punkt-Justage realisiert, welche sich unter anderem durch ihre Kompaktheit, Vakuumtauglichkeit und eine hervorragende Zugänglichkeit auch auf engstem Raum und bei gerätetechnischen Beschränkungen eignet. Dies erfolgt mittels der Realisierung der Justagekinematiken, insbesondere eines 2-Achs-Goniometers, mittels Festkörpergelenken 116.

Zur Justage wird zunächst der Eingangsfokus 104 (eingangsseitiger Brennpunkt) der Linse 100 auf den ersten vorbestimmten Punkt 102 (Anodenbrennfleck) mit Hilfe der zwei Parallelogrammführungen 220, 260 (Parallelachsen) justiert. Anschließend wird die Linse 100 um den ersten vorbestimmten Punkt 102 verschwenkt, bis der Ausgangsfokus 108 auf den zweiten vorbestimmten Punkt 106 (ein Zielpunkt der Probenoberfläche) justiert ist. Somit entkoppelt die Vorrichtung 98 beide Teiljustagen (Anodenseite/Probenseite), wodurch ein vereinfachter Justiervorgang realisiert wird.

Durch die Koaxialbauweise wird eine maximale Bauraumausnutzung erreicht, wodurch die Geräteintegration vereinfacht wird.

Die Vorrichtung 98 zeichnet sich durch eine sehr geringe Teileanzahl aus, da die jeweils zwei Kinematiken (Achsen) aus einem monolithischen Block realisiert werden. Die gezeigte Ausgestaltung zeichnet sich zudem durch eine fertigungsgerechte Gestaltung und Optimierung aus. Es können auch mehrere Anregungsquellen in einem Gerät verwendet werden, vorausgesetzt die Anregungspunkte aller Anregungsquellen lassen sich aufeinander einjustieren.

### Bezugszeichenliste

- 96: Apparatur
- 98: Vorrichtung
- 100: Röntgenoptik / Kapillar-Linse
- 101: Linsenachse
- 102: erster vorbestimmter Punkt
- 104: optischer Eingangspunkt / Eingangsfokus
- 106: zweiter vorbestimmter Punkt
- 108: optischer Ausgangspunkt / Ausgangsfokus
- 110: Aufnahmeelement
- 112: Spalt
- 114: Einstellelemente
- 115: Federelement
- 116: Festkörpergelenk
- 118: erstes Gehäuseteil
- 119: zweites Gehäuseteil
- 120: Halterung
- 122: Fenster
- 124: Position einer Distanzscheibe
- 126: Schraubverbindung
- 128: Aussparung
- 130: Gewindeloch
- 132: Durchgangsloch
- 134: Öffnung

- 200: Parallelverschiebemechanismus
- 220: erste Parallelkinematik / erste Parallelogrammführung
- 221: erste Parallelverschieberichtung
- 222: erstes Gegenelement
- 224: zweites Gegenelement
- 226: Verbindungselement
- 228: erste Verbindungsebene
- 230: zweite Verbindungsebene
- 232: erstes Ende
- 234: zweites Ende
- 238: erste Einstellkraft
- 239: erstes Gegenlager
- 240: erster Abstand
- 242: zweiter Abstand
- 244: Abstand zwischen erstem und zweitem Ende eines ersten Verbindungselements
- 246: Abstand zwischen erstem und zweitem Ende eines zweiten Verbindungselements

- 260: zweite Parallelkinematik /zweite Parallelogrammführung
- 261: zweite Parallelverschieberichtung
- 262: erstes Gegenelement
- 264: zweites Gegenelement
- 266: Verbindungselement
- 268: erste Verbindungsebene
- 270: zweite Verbindungsebene
- 272: erstes Ende
- 274: zweites Ende
- 278: zweite Einstellkraft
- 279: zweites Gegenlager
- 280: erster Abstand
- 282: zweiter Abstand
- 284: Abstand zwischen erstem und zweitem Ende eines ersten Verbindungselements
- 286: Abstand zwischen erstem und zweitem Ende eines zweiten Verbindungselements

- 300: Goniometermechanismus
- 320: erste Goniometerkinematik / erste trapezförmige Führung
- 321: Ebene rechtwinklig zu der ersten Schwenkachse
- 322: erstes Gegenelement
- 324: zweites Gegenelement
- 326: Verbindungselement
- 328: erste Verbindungsebene
- 330: zweite Verbindungsebene
- 332: erstes Ende
- 334: zweites Ende
- 336: erste Schwenkachse
- 338: dritte Einstellkraft
- 339: kombiniertes Gegenlager
- 340: erster Abstand
- 342: zweiter Abstand
- 344: Abstand zwischen erstem und zweitem Ende eines ersten Verbindungselements
- 346: Abstand zwischen erstem und zweitem Ende eines ersten Verbindungselements

- 360: zweite Goniometerkinematik / zweite trapezförmige Führung
- 361: Ebene welche sich rechtwinklig zu der zweiten Schwenkachse erstreckt
- 362: erstes Gegenelement
- 364: zweites Gegenelement
- 366: Verbindungselement
- 368: erste Verbindungsebene
- 370: zweite Verbindungsebene
- 372: erstes Ende
- 374: zweites Ende
- 376: zweite Schwenkachse
- 378: vierte Einstellkraft
- 380: erster Abstand
- 382: zweiter Abstand
- 384: Abstand zwischen erstem und zweitem Ende eines ersten Verbindungselements
- 386: Abstand zwischen erstem und zweitem Ende eines zweiten Verbindungselements

## Patentansprüche

1. Vorrichtung (98) zur räumlichen Ausrichtung einer Röntgenoptik (100) mit einem optischen Eingangspunkt (104) und einem optischen Ausgangspunkt (108), umfassend:
- ein Aufnahmeelement (110) zur Aufnahme und Fixierung der Röntgenoptik (100), sodass diese in einer Ausgangsposition in z-Richtung ausgerichtet ist und sich der Eingangspunkt (104) auf wenigstens einer, durch die Vorrichtung konstruktiv vorbestimmten Schwenkachse (336, 376) befindet;
- einen, mit dem Aufnahmeelement (110) verbundenen Parallelverschiebemechanismus (200) zur Justage des Eingangspunkts (104) der Röntgenoptik (100) auf einen ersten vorbestimmten Punkt (102) umfassend:
- eine erste Parallelkinematik (220), ausgebildet zur Parallelverschiebung der Röntgenoptik (100) in einer ersten, von der z-Richtung verschiedenen Parallelverschieberichtung (221),
- eine zweite Parallelkinematik (260), ausgebildet zur Parallelverschiebung der Röntgenoptik (100) in einer, von der z-Richtung und der ersten Parallelverschieberichtung (221) verschiedenen, zweiten Parallelverschieberichtung (261);
- einen, mit dem Aufnahmeelement (110) und dem Parallelverschiebemechanismus (200) verbundenen Goniometermechanismus (300) zur Justage des Ausgangspunkts (108) der Röntgenoptik (100) auf einen zweiten vorbestimmten Punkt (106), wobei der Goniometermechanismus (300) eingerichtet ist, ein Verschwenken der Röntgenoptik (100) um den Eingangspunkt (104) auszuführen, umfassend:
- eine erste Goniometerkinematik (320), ausgebildet, die Röntgenoptik (100) um eine erste Schwenkachse (336) zu verschwenken, wobei sich die erste Schwenkachse (336) in einer, von der z-Richtung verschiedenen Richtung erstreckt
- **dadurch gekennzeichnet, dass** der Parallelverschiebemechanismus (200) und der Goniometermechanismus (300) koaxial ineinander angeordnet sind.

2. Vorrichtung nach Anspruch 1, wobei die erste Parallelkinematik (220) des Parallelverschiebemechanismus (200) eine erste Parallelogrammführung (220) ist und/oder die zweite Parallelkinematik (260) des Parallelverschiebemechanismus (200) eine zweite Parallelogrammführung (260) ist.

3. Vorrichtung nach einem der vorhergehenden Ansprüche, wobei der Goniometermechanismus (300) eine zweite Goniometerkinematik (360) umfasst, ausgebildet, die Röntgenoptik (100) um eine zweite Schwenkachse (376) zu verschwenken, wobei sich die zweite Schwenkachse (376) in eine, von der z-Richtung und der ersten Schwenkachse (336) verschiedene Richtung erstreckt.

4. Vorrichtung nach einem der vorhergehenden Ansprüche, wobei die erste Goniometerkinematik (320) eine erste gleichschenklige, symmetrische, trapezförmige Führung (320) und/oder die zweite Goniometerkinematik (360) eine zweite gleichschenklige, symmetrische trapezförmige Führung (360) ist.

5. Vorrichtung nach wenigstens einem der Ansprüche 2 bis 4, wobei wenigstens zwei der Führungen (220, 260, 320, 360) jeweils ein erstes Gegenelement (222, 262, 322, 362) und ein zweites Gegenelement (224, 264, 324, 364) umfassen, welche mittels eines Verbindungselementenpaares (226, 266, 326, 366) der jeweiligen Führung (220, 260, 320, 360) miteinander verbunden sind.

6. Vorrichtung nach Anspruch 5, wobei die ersten Gegenelemente (222, 262, 322, 362) zwischen dem zweiten Gegenelement (224, 264, 324, 364) der jeweiligen Führung (220, 260, 320, 360) und der ersten Schwenkachse (336) angeordnet sind.

7. Vorrichtung nach Anspruch 5 oder 6, wobei zwei der ersten Gegenelemente (222, 262, 322, 362) oder zwei der zweiten Gegenelemente (224, 264, 324, 364) der wenigstens zwei Führungen (220, 260, 320, 360) unbeweglich miteinander verbunden oder einstückig ausgeführt sind.

8. Vorrichtung nach einem der Ansprüche 5 bis 7, wobei entlang einer mechanischen Verbindungsabfolge, ausgehend von dem Aufnahmeelement (110) hin zu einem, zur Fixierung der Vorrichtung vorgesehenen, ersten (222, 262, 322, 362) oder zweiten Gegenelement (224, 264, 324, 364), das Aufnahmeelement (110) mit einem ersten (222, 262, 322, 362) oder zweiten Gegenelement (224, 264, 324, 364) unbeweglich verbunden oder einstückig ausgeführt ist und von diesem ausgehend alternierend die zu den Parallelogrammführungen (220, 260) und/oder trapezförmigen Führungen (320, 360) gehörigen ersten Gegenelemente (222, 262, 322, 362) unbeweglich miteinander verbunden oder einstückig ausgeführt sind und/oder die zweiten Gegenelemente (224, 264, 324, 364) unbeweglich miteinander verbunden oder einstückig ausgeführt sind.

9. Vorrichtung nach einem der Ansprüche 5 bis 8, wobei
- das Aufnahmeelement (110) mit dem ersten Gegenelement (322) der ersten trapezförmigen Führung (320) unbeweglich verbunden oder einstückig ausgeführt ist,
- das zweite Gegenelement (324) der ersten trapezförmigen Führung (320) mit dem zweiten Gegenelement (364) der zweiten trapezförmigen Führung (360) unbeweglich verbunden oder einstückig ausgeführt ist,
- das erste Gegenelement (362) der zweiten trapezförmigen Führung (360) mit dem ersten Gegenelement (222) der ersten Parallelogrammführung (220) unbeweglich verbunden oder einstückig ausgeführt ist,
- das zweite Gegenelement (224) der ersten Parallelogrammführung (220) mit dem zweiten Gegenelement (264) der zweiten Parallelogrammführung (260) unbeweglich verbunden oder einstückig ausgeführt ist, und
- das erste Gegenelement (262) der zweiten Parallelogrammführung (260) zur Fixierung der Vorrichtung (98) vorgesehen ist.

10. Vorrichtung nach wenigstens einem der Ansprüche 5 bis 9, wobei die Verbindungselemente (226, 266, 326, 366) der Verbindungselementenpaare (226, 266, 326, 366) jeweils über Enden (232, 234, 272, 274, 332, 334, 372, 374) der Verbindungselemente (226, 266, 326, 366) mit den ersten Gegenelementen (222, 262, 322, 362) und den zweiten Gegenelementen (224, 264, 324, 364) verbunden sind.

11. Vorrichtung nach Anspruch 10, wobei die Enden (232, 234, 272, 274, 332, 334, 372, 374) der Verbindungselemente (226, 266, 326, 366) Gelenke oder Festkörpergelenk (116) aufweisen, insbesondere je Ende (232, 234, 272, 274, 332, 334, 372, 374) ein Gelenk oder Festkörpergelenk (116) aufweisen.

12. Vorrichtung nach wenigstens einem der Ansprüche 5 bis 11, wobei die Parallelogrammführungen (220, 260) und/oder die trapezförmigen Führungen (320, 360) derart zueinander angeordnet sind, dass die Röntgenoptik (100) zentral, zwischen den jeweiligen beiden Verbindungselementen (226, 266, 326, 366) der Verbindungselementenpaare durch das Aufnahmeelement (110) aufnehmbar ist.

13. Vorrichtung nach einem der vorhergehenden Ansprüche, wobei der Goniometermechanismus (300) koaxial im Parallelverschiebemechanismus (200) angeordnet ist.

14. Vorrichtung nach einem der vorhergehenden Ansprüche, wobei der Parallelverschiebemechanismus (200) einstückig ausgebildet ist und/oder der Goniometermechanismus (300) einstückig ausgebildet ist.

15. Apparatur (96) umfassend die Vorrichtung (98) nach einem der vorhergehenden Ansprüche und eine Röntgenoptik (100), welche in dem Aufnahmeelement (110) aufgenommen und fixiert ist, derart, dass die Linse (100) in einer Ausgangsposition in z-Richtung (530) ausgerichtet ist und sich der optische Eingangspunkt (104) auf wenigstens einer, durch die Vorrichtung konstruktiv vorbestimmten Schwenkachse (336, 376) befindet.

## Claims

1. A device (98) for spatially orienting an x-ray optical unit (100) with an optical entry point (104) and an optical exit point (108), comprising:
- a holding element (110) for holding and affixing the x-ray optical unit (100), so that it is aligned in an initial position in the z direction and the entry point (104) is located on at least one pivot axis (336, 376) which is structurally predetermined by the device;
- a parallel displacement mechanism (200) connected to the holding element (110) for adjusting the entry point (104) of the x-ray optical unit (100) on a first predetermined point (102), comprising:
- a first parallel kinematics unit (220), designed for the parallel displacement of the x-ray optical unit (100) in a first parallel displacement direction (221) that differs from the z direction,
- a second parallel kinematics unit (260), designed for the parallel displacement of the x-ray optical unit (100) in a second parallel displacement direction (261) that differs from the z direction and the first parallel displacement direction (221);
- a goniometer mechanism (300), which is connected to the holding element (110) and the parallel displacement mechanism (200), for adjusting the exit point (108) of the x-ray optical unit (100) to a second predefined point (106), wherein the goniometer mechanism (300) is designed to implement a pivot of the x-ray optical unit (100) around the entry point (104), comprising:
- a first goniometer kinematics unit (320) designed to pivot the x-ray optical unit (100) around a first pivot axis (336), wherein the first pivot axis (336) extends in a direction that differs from the z direction
- **characterized in that** the parallel displacement mechanism (200) and the goniometer mechanism (300) are coaxially arranged in each other.

2. The device according to Claim 1, wherein the first parallel kinematics unit (220) of the parallel displacement mechanism (200) is a first parallelogram guide (220) and/or the second parallel kinematics unit (260) of the parallel displacement mechanism (200) is a second parallelogram guide (260).

3. The device according to any one of the preceding claims, wherein the goniometer mechanism (300) comprises a second goniometer kinematics unit (360), designed to pivot the x-ray optical unit (100) around a second pivot axis (376), wherein the second pivot axis (376) extends in a direction that differs from the z direction and the first pivot axis (336).

4. The device according to any one of the preceding claims, wherein the first goniometer kinematics unit (320) is a first isosceles, symmetrical, trapezoidal guide (320) and/or the second goniometer kinematics unit (360) is a second isosceles, symmetrical, trapezoidal guide (360).

5. The device according to at least one of Claims 2 to 4, wherein at least two of the guides (220, 260, 320, 360) comprise respectively a first counter element (222, 262, 322, 362) and a second counter element (224, 264, 324, 364), which are connected to each other by means of a connecting element pair (226, 266, 326, 366) of the respective guide (220, 260, 320, 360).

6. The device according to Claim 5, wherein the first counter elements (222, 262, 322, 362) are arranged between the second counter element (224, 264, 324, 364) of the respective guide (220, 260, 320, 360) and the first pivot axis (336).

7. The device according to Claim 5 or 6, wherein two of the first counter elements (222, 262, 322, 362) or two of the second counter elements (224, 264, 324, 364) of the at least two guides (220, 260, 320, 360) are connected to each other in an immovable manner or are designed as a single piece.

8. The device according to any one of Claims 5 to 7, wherein along a mechanical connection sequence, starting from the holding element (110) through to a first (222, 262, 322, 362) or second counter element (224, 264, 324, 364) provided for affixing the device, the holding element (110) is immovably connected to, or designed as a single piece with, a first (222, 262, 322, 362) or second counter element (224, 264, 324, 364), and starting from this, in alternation, the first counter elements (222, 262, 322, 363) which belong to the parallelogram guides (220, 260) and/or trapezoidal guides (320, 360) are immovably connected to each other or designed as a single piece and/or the second counter elements (224, 264, 324, 364) are immovably connected to each other or are designed as a single piece.

9. The device according to any one of Claims 5 to 8, wherein
- the holding element (110) is immovably connected to, or designed as a single piece with, the first counter element (322) of the first trapezoidal guide (320),
- the second counter element (324) of the first trapezoidal guide (320) is immovably connected to, or designed as a single piece with, the second counter element (364) of the second trapezoidal guide (360),
- the first counter element (362) of the second trapezoidal guide (360) is immovably connected to, or designed as a single piece with, the first counter element (222) of the first parallelogram guide (220),
- the second counter element (224) of the first parallelogram guide (220) is immovably connected to, or designed as a single piece with, the second counter element (264) of the second parallelogram guide (260), and
- the first counter element (262) of the second parallelogram guide (260) is provided for affixing the device (98).

10. The device according to at least one of Claims 5 to 9, wherein the connecting elements (226, 266, 326, 366) of the connecting element pairs (226, 266, 326, 366) are respectively connected via ends (232, 234, 272, 274, 332, 334, 372, 374) of the connecting elements (226, 266, 326, 366) to the first counter elements (222, 262, 322, 362) and the second counter elements (224, 264, 324, 364).

11. The device according to Claim 10, wherein the ends (232, 234, 272, 274, 332, 334, 372, 374) of the connecting elements (226, 266, 326, 366) include hinges or a flexure hinge (116), in particular include one hinge or flexure hinge (116) on each end (232, 234, 272, 274, 332, 334, 372, 374).

12. The device according to at least one of Claims 5 to 11, wherein the parallelogram guides (220, 260) and/or the trapezoid guides (320, 360) are arranged in relation to each other in such a manner that the x-ray optical unit (100) can be centrally held by the holding element (110) between the respective two connecting elements (226, 266, 326, 366) of the connecting element pairs.

13. The device according to any one of the preceding claims, wherein the goniometer mechanism (300) is coaxially arranged in the parallel displacement mechanism (200).

14. The device according to any one of the preceding claims, wherein the parallel displacement mechanism (200) is designed as a single piece and/or the goniometer mechanism (300) is designed as a single piece.

15. An apparatus (96) comprising the device (98) according to any one of the preceding claims and an x-ray optical unit (100) which is held and affixed in the holding element (110) in such a manner that the lens (100) is aligned in an initial position in the z direction (530) and the optical entry point (104) is located on at least one pivot axis (336, 376) which is structurally predetermined by the device.

## Revendications

1. Dispositif (98) d'alignement dans l'espace d'une optique à rayons X (100) avec un point d'entrée optique (104) et un point de sortie optique (108), comprenant :
- un élément d'accueil (110) pour l'accueil et la fixation de l'optique à rayons X (100), de telle sorte que celle-ci est alignée dans la direction z dans une position initiale et que le point d'entrée (104) se trouve sur au moins un axe de pivotement (336, 376) prédéterminé structurellement par le dispositif ;
- un mécanisme de déplacement parallèle (200) relié à l'élément d'accueil (110) pour l'alignement du point d'entrée (104) de l'optique à rayons X (100) sur un premier point prédéterminé (102), comprenant :
- une première cinématique parallèle (220), formée pour le déplacement parallèle de l'optique à rayons X (100) dans une première direction de déplacement parallèle (221) différente de la direction z,
- une deuxième cinématique parallèle (260), formée pour le déplacement parallèle de l'optique à rayons X (100) dans une deuxième direction de déplacement parallèle (261) différente de la direction z et de la première direction de déplacement parallèle (221) ;
- un mécanisme goniomètre (300), relié à l'élément d'accueil (110) et au mécanisme de déplacement parallèle (200), pour l'alignement du point de sortie (108) de l'optique à rayons X (100) sur un deuxième point prédéterminé (106), le mécanisme goniomètre (300) étant installé afin d'exécuter un pivotement de l'optique à rayons X (100) sur le point d'entrée (104), comprenant :
- une première cinématique goniomètre (320), formée afin de faire pivoter l'optique à rayons X (100) sur un premier axe de pivotement (336), le premier axe de pivotement (336) s'étendant dans une direction différente de la direction z,
- **caractérisé en ce que** le mécanisme de déplacement parallèle (200) et le mécanisme goniomètre (300) sont disposés de façon coaxial l'un dans l'autre.

2. Dispositif selon la revendication 1, la première cinématique parallèle (220) du mécanisme de déplacement parallèle (200) étant un premier guide en parallélogramme (220) et/ou la deuxième cinématique parallèle (260) du mécanisme de déplacement parallèle (200) étant un deuxième guide en parallélogramme (260).

3. Dispositif selon l'une des revendications précédentes, le mécanisme goniomètre (300) comprenant une deuxième cinématique goniomètre (360), formée afin de faire pivoter l'optique à rayons X (100) sur un deuxième axe de pivotement (376), le deuxième axe de pivotement (376) s'étendant dans une direction différente de la direction z et du premier axe de pivotement (336).

4. Dispositif selon l'une des revendications précédentes, la première cinématique goniomètre (320) étant un premier guide isocèle symétrique en forme de trapèze (320) et/ou la deuxième cinématique goniomètre (360) étant un deuxième guide isocèle symétrique en forme de trapèze.

5. Dispositif selon au moins l'une des revendications précédentes 2 à 4, au moins deux des guides (220, 260, 320, 360) comprenant respectivement au moins un premier contre-élément (222, 262, 322, 362) et un deuxième contre-élément (224, 264, 324, 364), lesquels sont reliés l'un à l'autre (220, 260, 320, 360) au moyen d'une paire d'éléments de liaison (226, 266, 326, 366) du guide respectif.

6. Dispositif selon la revendication 5, les premiers contre-éléments (222, 262, 322, 362) étant disposés entre le deuxième contre-élément (224, 264, 324, 364) du guide respectif (220, 260, 320, 360) et le premier axe de pivotement (336).

7. Dispositif selon la revendication 5 ou 6, deux des premiers contre-éléments (222, 262, 322, 362) ou deux des deuxièmes contre-éléments (224, 264, 324, 364) des au moins deux guides (220, 260, 320, 360) étant reliés l'un à l'autre de façon immobile ou réalisés d'une pièce.

8. Dispositif selon l'une des revendications 5 à 7, l'élément d'accueil (110) étant relié de façon immobile ou réalisé d'une pièce avec un premier contre-élément (222, 262, 322, 362) ou avec un deuxième contre-élément (224, 264, 324, 364) le long d'une chaîne de liaison mécanique à partir de l'élément d'accueil (110) jusqu'à un premier contre-élément (222, 262, 322, 362) ou à un deuxième contre-élément (224, 264, 324, 364) prévu pour la fixation du dispositif, et, à partir de ce contre-élément, les premiers contre-éléments (222, 262, 322, 362) appartenant aux guides en parallélogramme (220, 260) et/ou aux guides en forme de trapèze (320, 360) étant reliés entre eux de façon immobile ou réalisés d'une pièce et/ou les deuxièmes contre-éléments (224, 264, 324, 364) étant reliés entre eux de façon immobile ou réalisés d'une pièce, en alternance.

9. Dispositif selon l'une des revendications 5 à 8,
- l'élément d'accueil (110) étant relié de façon immobile ou réalisé d'une pièce avec le premier contre-élément (322) du premier guide en forme de trapèze (320),
- le deuxième contre-élément (324) du premier guide en forme de trapèze (320) étant relié de façon immobile ou réalisé d'une pièce avec le deuxième contre-élément (364) du deuxième guide en forme de trapèze (360),
- le premier contre-élément (362) du deuxième guide en forme de trapèze (360) étant relié de façon immobile ou réalisé d'une pièce avec le premier contre-élément (222) du premier guide en parallélogramme (220),
- le deuxième contre-élément (224) du premier guide en parallélogramme (220) étant relié de façon immobile ou réalisé d'une pièce avec le deuxième contre-élément (264) du deuxième guide en parallélogramme (260), et
- le premier contre-élément (262) du deuxième guide en parallélogramme (260) étant prévu pour la fixation du dispositif (98).

10. Dispositif selon au moins l'une des revendications précédentes 5 à 9, les éléments de liaison (226, 266, 326, 366) des paires d'éléments de liaison (226, 266, 326, 366) étant respectivement reliés avec les premiers contre-éléments (222, 262, 322, 362) et les deuxièmes contre-éléments (224, 264, 324, 364) par les extrémités (232, 234, 272, 274, 332, 334, 372, 374) des éléments de liaison (226, 266, 326, 366).

11. Dispositif selon la revendication 10, les extrémités (232, 234, 272, 274, 332, 334, 372, 374) des éléments de liaison (226, 266, 326, 366) présentant des articulations ou des articulations à corps solide (116), en particulier une articulation ou une articulation à corps solide (116) par extrémité (232, 234, 272, 274, 332, 334, 372, 374).

12. Dispositif selon au moins l'une des revendications 5 à 11, les guides en parallélogramme (220, 260) et/ou les guides en forme de trapèze (320, 360) étant disposés les uns par rapport aux autres de telle sorte que l'optique à rayons X (100) peut être accueillie par l'élément d'accueil (110) de façon centrale, entre les deux éléments de liaison respectifs (226, 266, 326, 366) des paires d'éléments de liaison.

13. Dispositif selon l'une des revendications précédentes, le mécanisme goniomètre (300) étant disposé coaxialement dans le mécanisme de déplacement parallèle (200).

14. Dispositif selon l'une des revendications précédentes, le mécanisme de déplacement parallèle (200) étant formé d'une pièce et/ou le mécanisme goniomètre (300) étant formé d'une pièce.

15. Appareillage (96) comprenant le dispositif (98) selon l'une des revendications précédentes et une optique à rayons X (100), laquelle est accueillie et fixée dans l'élément d'accueil (110) de telle sorte que la lentille (100) est alignée dans la direction z (530) dans une position initiale, et que le point d'entrée optique (104) se trouve sur au moins un axe de pivotement (336, 376) prédéterminé structurellement par le dispositif.
